# EUROPÄISCHE PATENTSCHRIFT

(11) **EP 2 670 688 B1**
(45) Veröffentlichungstag und Bekanntmachung des Hinweises auf die Patenterteilung: **09.11.2016**
(21) Anmeldenummer: 12712538.3
(22) Anmeldetag: 03.02.2012
(51) Int. Cl.: B65G 1/137

(54) **VERFAHREN UND ANLAGE ZUM KOMMISSIONIEREN VON ARTIKELN**
PROCESS AND INSTALLATION FOR THE ORDER-PICKING OF ARTICLES
PROCÉDÉ ET INSTALLATION DE PRÉPARATION DE COMMANDES

(30) Priorität: 03.02.2011 AT 1472011
(43) Veröffentlichungstag der Anmeldung: 11.12.2013
(73) Patentinhaber: TGW Logistics Group GmbH, 4600 Wels (AT)
(72) Erfinder: HANSL, Rudolf, A-4020 Linz (AT)
(74) Vertreter: Burger, Hannes
(86) Internationale Anmeldenummer: PCT/AT2012/050015
(87) Internationale Veröffentlichungsnummer: WO 2012/103566

(56) Entgegenhaltungen:
- EP-A2- 0 943 561
- WO-A1-2009/143548
- WO-A2-2006/042347

## Beschreibung

Die Erfindung betrifft ein Verfahren und eine Anlage zum Kommissionieren von Artikeln aus Lagerbehältern in Auftragsbehälter, wie in den Oberbegriffen der Ansprüche 1 und 19 beschrieben.

Heutzutage bedient man sich vornehmlich dem so genannten Kommissionierprinzip "Ware zum Mann".

Beim Prinzip "Ware zum Mann" sind die zu kommissionierenden Artikel in Ladehilfsmittel, vorzugsweise in Behältern, oder auf Tablaren, Paletten und dgl. in einem Lager bevorratet. Solche Behälter werden auch Lagerbehälter genannt. Die Kommissionierung erfolgt örtlich vom Lager getrennt an Kommissionier-Arbeitsplätzen. Die in den Lagerbehältern gelagerten Artikel werden über eine erste Fördertechnik, wie motorbetriebene Rollenbahnen, Gurtbänder, Hängeförderer, etc. zu einem Kommissionier-Arbeitsplatz transportiert. Am Kommissionier-Arbeitsplatz befindet sich eine Kommissionierperson, um gemäß Kommissionieraufträgen Artikel aus den Lagerbehältern zu entnehmen und die entnommenen Artikel in so genannte Auftragsbehälter zu geben. Ein Auftragsbehälter kann eine Vielzahl von verschiedenen Artikeln aufnehmen. Die Kommissionierperson muss sich wenig bewegen, um einen Kommissionierauftrag abarbeiten zu können. Die Auftragsbehälter werden hierzu auf einer zweiten Fördertechnik zum Kommissionier-Arbeitsplatz transportiert.

Ein solches Kommissionierprinzip ist beispielsweise aus der DE 101 36 354 A1, AT 500 946 A1 und EP 1 572 558 A1 bekannt. Bei diesen bekannten Kommissionierverfahren werden die Lagerbehälter allerdings unabhängig von der Umschlaghäufigkeit der Artikel manipuliert. Wird ein Artikel zu einem Kommissionierauftrag benötigt, wird ein Lagerbehälter mit diesem Artikel über die erste Fördertechnik zum Kommissionier-Arbeitsplatz angefördert, zum Kommissionieren auf einem Bereitstellplatz angeboten und nach Abarbeitung des Kommissionierauftrages wieder vom Kommissionier-Arbeitsplatz in das Lager transportiert. Bei komplexeren Kommissionieranlagen können in der Bereitstellung von Lagerbehältern immer wieder Staus auftreten, was sich negativ auf die Kommissioniereffizienz auswirkt.

Auch sind aus dem Stand der Technik, beispielsweise der gattungsgemäßen WO 2009/143548 A1 oder der DE 10 2006 058 523 A1 und WO 2007/134832 A2 Kommissioniersysteme bekannt, bei denen Artikel abhängig von deren strukturellen Eigenschaften auf der Fördertechnik entlang unterschiedlicher Förderwege entweder mittels Ladehilfsmitteln, insbesondere Tablaren, oder unmittelbar auf einer Förderebene aufliegend (ohne Ladehilfsmittel) vom Lager zu den Kommissionier-Arbeitsplätzen transportiert werden.

Ferner ist aus der EP 0 847 939 A1 ein Verfahren zum Kommissionieren von Artikeln unterschiedlicher Umschlaghäufigkeit aus Lagerbehältern in Auftragsbehälter bekannt, bei dem die Lagerbehälter durch eine erste Fördertechnik von einem Behälterlager zu Kommissionier-Arbeitsplätzen in unterschiedlichen Kommissionierbereichen gefördert und an diesen jeweils von einer Kommissionierperson zu einem Kommissionierauftrag zumindest ein Artikel aus dem Lagerbehälter entnommen und in einem durch eine zweite Fördertechnik bereitgestellten Auftragsbehälter abgelegt wird. Die Kommissionier-Arbeitsplätze weisen jeweils eine Vielzahl von Durchlaufkanälen auf, in denen abhängig von der Umschlaghäufigkeit der Artikel die Lagerbehälter bereitgestellt werden. Die Artikel werden nach dem Paretoprinzip in Schnell- und Langsamläufer klassifiziert. 20% des Artikelvolumens sind Schnellläufer, 80% Langsamläufer. Auch die Durchlaufkanäle werden von der Steuerung und baulich unterschieden in Schnellläufer-Durchlaufkanäle und Langsamläufer-Durchlaufkanäle. Enthält ein Lagerbehälter Schnellläufer-Artikel wird er in einem Schnellläufer-Durchlaufkanal bereitgestellt. Enthält ein Lagerbehälter Langsamläufer-Artikel wird er in einem Langsamläufer-Durchlaufkanal bereitgestellt. Lagerbehälter, welche Langsamläufer-Artikel enthalten und noch teilweise befüllt sind, werden nach einem Kommissioniervorgang von einer Kommissionierperson von einer Entnahmeposition im vorderen Endbereich eines Durchlaufkanals in eine Rückgabeposition im hinteren Endbereich eines Durchlaufkanals manuell geschoben. Die Langsamläufer-Durchlaufkanäle sind hierzu ferner mit einer Sperre ausgestattet, welche die Rückgabeposition definiert und den Lagerbehälter zurückhält, wenn dieser wiederum in das Behälterlager eingelagert werden soll. Bedingt durch den hohen prozentuellen Anteil an Langsamläufer und der "artikelreinen" Bereitstellung von Artikel in einem Durchlaufkanal muss auch eine entsprechend hohe Anzahl an Durchlaufkanälen vorgesehen werden, um eine effiziente Betriebsweise der Kommissionieranlage zu ermöglichen. Auch werden die Artikel innerhalb eines jeden Kommissionier-Arbeitsplatzes unabhängig von einer Auftragsvorausschau und ob gemäß der Auftragsvorausschau ein Durchlaufkanal zur neuerlichen Bereitstellung eines Langsamläufer-Artikels benötigt wird, der Durchlaufkanal durch Zurückschieben eines Lagerbehälter "geleert", sodass ein hoher Manipulationsaufwand für die Kommissionierperson entsteht. So kann der Fall eintreten, dass innerhalb einer kurzen Zeitspanne, beispielsweise 30 Minuten, zu unterschiedlichen Kommissionieraufträgen derselbe Artikel mehrmals benötigt wird und zu jedem Kommissionierauftrag Lagerbehälter in ein und denselben Durchlaufkanal bereitgestellt werden müssen. Die mehrmaligen Bereitstellungsvorgänge erfordern eine hohe Leistung an das Regalförderfahrzeug, welches die Durchlaufkanäle mit den Lagerbehältern beschickt, was sich ungünstig auf die Standzeit der Kommissionieranlage auswirkt.

Der Erfindung liegt die Aufgabe zugrunde ein Verfahren und eine Anlage zum Kommissionieren von Artikeln aus Lagerbehältern durch Kommissionierpersonen vorzusehen, wodurch sich die Kommissioniereffizienz unter Beachtung strenger ergonomischer Anforderungen erhöhen lässt.

Die Aufgabe der Erfindung wird durch die Merkmale und Maßnahmen der Ansprüche 1 und 19 gelöst. Von Vorteil ist, dass Kommissionieraufträge an baulich getrennten Kommissionier-Arbeitsplätzen in unterschiedlichen Kommissionierbereichen nach dem Kommissionierprinzip "Ware zum Mann" parallel abgearbeitet werden. Ein erster Kommissionierbereich bzw. zumindest ein erster Kommissionier-Arbeitsplatz ist im Behälterlager integriert angeordnet, während ein zweiter Kommissionierbereich bzw. zumindest ein zweiter Kommissionier-Arbeitsplatz außerhalb desselben Behälterlagers angeordnet ist. Der erste Kommissionier-Arbeitsplatz und zweite Kommissionier-Arbeitsplatz sind dabei einem einzigen Behälterlager zugeordnet. Der Förderweg (65) zwischen einem bestimmten Lagerkanal im Behälterlager und einem ersten Kommissionierbereich ist deutlich kürzer als ein Förderweg (80) zwischen einem bestimmten Lagerkanal im Behälterlager und einem zweiten Kommissionierbereich. Die Artikel werden dabei in Lagerbehältern koordiniert auf die Kommissionierbereiche verteilt, wobei die Verteilung auf einer Dispositionsprüfung beruht. Die Lagerbehälter können ohne Unterbrechung durch Staus entlang der ersten Fördertechnik zu den Kommissionier-Arbeitsplätzen angefördert und kontinuierlich der Kommissionierperson bereitgestellt werden. Durch diese Maßnahmen kann selbst bei sehr breitem Artikelspektrum (30.000 bis 40.000 unterschiedliche Artikel) eine sehr hohe Kommissioniereffizienz erreicht werden.

Von Vorteil ist auch die Maßnahme nach Anspruch 2, wonach die Verteilung der Lagerbehälter auf die Kommissionierbereiche entsprechend der Umschlaghäufigkeit der Artikel erfolgt. So werden Artikel hoher Umschlaghäufigkeit (Schnellläufer) im ersten Kommissionierbereich und Artikel niedriger Umschlaghäufigkeit (Langsamläufer) im zweiten Kommissionierbereich kommissioniert. Durch diese Maßnahme wird eine Vermischung von Lagerbehältern mit Artikeln unterschiedlicher Umschlaghäufigkeit an einem Kommissionier-Arbeitsplatz im ersten Kommissionierbereich und Kommissionier-Arbeitsplatz im zweiten Kommissionierbereich und damit die gegenseitige Blockierung in der Bereitstellung von Lagerbehältern vermieden.

Durch die Maßnahme gemäß Anspruch 3 kann die Auslastung einer Kommissionierperson an einem Kommissionier-Arbeitsplatz ermittelt werden. Ein Lagerbehälter wird an einem Kommissionier-Arbeitsplatz im ersten Kommissionierbereich nur dann bereitgestellt, wenn die Kommissionierperson auch einen Kommissionierauftrag zeitnah abarbeiten kann. Wird beispielsweise vom Rechner in der Dispositionsprüfung festgestellt, dass in einem Förderabschnitt der zweiten Fördertechnik, insbesondere an einer durch den Kommissionier-Arbeitsplatz hindurchführenden Förderbahn für Auftragsbehälter bereits eine Vielzahl von Auftragsbehältern aufgestaut ist, ist die Kommissionierperson über eine Zeitspanne mit der Abarbeitung "anstehender" Kommissionieraufträge beschäftigt. In diesem Fall werden vorerst keine weiteren Lagerbehälter (Artikel) zum Kommissionier-Arbeitsplatz im ersten Kommissionierbereich angefördert. Jedoch können entkoppelt von der Abarbeitung der Kommissionieraufträge im ersten Kommissionierbereich, Lagerbehälter (Artikel) über die erste Fördertechnik einem der Kommissionier-Arbeitsplätze im zweiten Kommissionierbereich zugeführt werden. Sind die "anstehenden" Kommissionieraufträge im ersten Kommissionierbereich abgearbeitet und liegt daher der Leistungsparameter wieder unterhalb eines Grenzwertes, können über die erste Fördertechnik wieder Lagerbehälter zum Kommissionier-Arbeitsplatz im ersten Kommissionierbereich zugeführt werden. Dadurch wird in den Kommissionierbereichen eine annähernd gleichmäßige Auslastung der Kommissionierpersonen erreicht.

Von Vorteil ist auch die Maßnahme nach Anspruch 4, wonach ein Lagerbehälter an einem der Kommissionier-Arbeitsplätze im ersten Kommissionierbereich bereitgestellt wird, wenn einer der Bereitstellungsbereiche unbelegt ist. Sind mehrere Bereitstellungsbereiche unbelegt, kann der Lagerbehälter zu irgendeinem der Bereitstellungsbereiche abhängig von der Anzahl der zu entnehmenden Artikelpositionen möglichst nahe zu einer Halteposition für einen Auftragsbehälter transportiert werden. Die Bereitstellung der Lagerbehälter kann ähnlich dem Prinzip der so genannten "chaotischen Lagerung" erfolgen, daher werden die Lagerbehälter nicht zu einem bestimmten Bereitstellungsbereich transportiert, sondern zu einem beliebigen, freien Bereitstellungsbereich, welcher vom Rechner der Kommissionieranlage nach einem Optimierungsprinzip (Dispositionsanalyse) errechnet und bestimmt wird. Andererseits wird der Lagerbehälter an einem der Kommissionier-Arbeitsplätze im zweiten Kommissionierbereich bereitgestellt, wenn sämtliche Bereitstellungsbereiche an einem der Kommissionier-Arbeitsplätze im ersten Kommissionierbereich belegt sind.

Wird vom Lagerverwaltungssystem (Rechner) in der Auftragsvorausschau über die erfassten Kommissionieraufträge ein Kommissionierauftrag ermittelt, bei dem die Bestandsmenge in einem der im Behälterlager zwischengelagerten Lagerbehälter mit der Bestellmenge für einen Artikel übereinstimmt, wie im Anspruch 5 beschrieben, wird der Lagerbehälter dem zweiten Kommissionierbereich zugeführt und vom Rechner als Auftragsbehälter definiert, in welchen Artikel eines anderen Artikeltyps abgelegt werden. Dadurch kann der Kommissioniervorgang besonders effizient durchgeführt werden können. Es ist nicht erforderlich, dass dieser Auftragsbehälter mehrere Kommissionier-Arbeitsplätze durchlaufen muss, um alle Artikel zu einem Kommissionierauftrag zu erhalten. Dadurch werden die Transportstrecken für die Auftragsbehälter optimiert und wird auch die zweite Fördertechnik entlastet. Zudem kann die Anzahl der in der Kommissionieranlage befindlichen Auftragsbehälter reduziert werden.

Durch die Maßnahme nach Anspruch 6 können schon in der Inbetriebsetzungsphase der Kommissionieranlage in beiden Kommissionierbereichen parallel Kommissionieraufträge abgearbeitet und dadurch die Kommissionierleistung erhöht werden.

Eine besonders einfache Maßnahme zur Bereitstellung von Lagerbehältern in Durchlaufkanälen ist im Anspruch 7 beschrieben. Eine Rücklagerung eines Lagerbehälters vom Bereitstellungsbereich in das Behälterlager kann ohne Manipulation des Lagerbehälters durch die Kommissionierperson erfolgen.

Hingegen wird mit der Maßnahme nach Anspruch 8 die Bereitstellung einer hohen Anzahl von Lagerbehältern an einem der Kommissionier-Arbeitsplätze im ersten Kommissionierbereich ermöglicht. Eine Mischung unterschiedlicher Artikeltypen innerhalb eines Durchlaufkanals wird vermieden. In diesem Fall kann erst nach Rücklagerung eines oder mehrerer Lagerbehälter(s) vom Bereitstellungsbereich in das Behälterlager ein anderer Artikeltyp in demselben Durchlaufkanal bereitgestellt werden.

Gemäß den Maßnahmen in den Ansprüchen 9 und 10 wird ein noch teilweiser befüllter Lagerbehälter vom Bereitstellungsbereich in das Behälterlager rückgelagert. Dabei kann der Lagerbehälter entweder unmittelbar vom Bereitstellungsbereich auf die erste Fördertechnik übernommen oder vorerst von einer Kommissionierperson vom Bereitstellungsbereich in den Übergabebereich bewegt und von diesem auf die erste Fördertechnik übernommen werden.

Entgegen dem aus dem Stand der Technik bekannten Rücklagervorgang, werden gemäß den Maßnahmen nach den Ansprüchen 11 bis 14 Lagerbehälter nicht zwangsweise nach jedem Entnahmevorgang von Artikeln vom Bereitstellungsbereich in das Behälterlager rückgelagert. Die Rücklagerung wird von einem einzigen Rücklagerkriterium oder einer Kombination von mehreren Rücklagerkriterien abhängig gemacht. Dadurch kann der Manipulationsaufwand für die Kommissionierperson minimiert werden. Auch kann die Anzahl der Bereitstellungsvorgänge reduziert und dennoch eine hohe Kommissioniereffizienz erreicht werden. Außerdem kann die erste Fördertechnik unterhalb ihrer maximalen Leistungsgrenze betrieben werden, was sich positiv auf den Wartungsaufwand und die Standzeit der Kommissionieranlage auswirkt. So ist es nun vorgesehen, dass ein Lagerbehälter (Artikel) nur dann rückgelagert wird, wenn für diesen Artikel gemäß der Auftragsvorausschau bzw. innerhalb eines Zeitfensters kein weiterer Kommissionierauftrag vorliegt und/oder die erste Fördertechnik, insbesondere ein Förderfahrzeug nicht mit maximaler Antriebsleistung betrieben wird. Andererseits kann für den Rücklagervorgang auch die Auslastung einer Kommissionierperson an einem Kommissionier-Arbeitsplatz berücksichtigt werden. Ein Lagerbehälter wird an einem Kommissionier-Arbeitsplatz im ersten Kommissionierbereich nur dann rückgelagert, wenn die Kommissionierperson auch einen Rücklagervorgang zeitnah vornehmen kann.

Auch die Maßnahmen nach den Ansprüchen 15 bis 17 sind von Vorteil, da die Zuteilung der Lagerbehälter auf die Bereitstellungsplätze an einem der Kommissionier-Arbeitsplätze im ersten Kommissionierbereich von einem einzigen Optimierungskriterium oder einer Kombination von mehreren Optimierungskriterien abhängig gemacht wird. Dadurch wird beim Kommissioniervorgang eine Verkürzung der Laufstrecke für die Kommissionierperson erreicht. Werden die Lagerbehälter innerhalb einer vom Rechner dynamisch zugewiesenen Kommissionierzone, welche durch eine gemäß einem Kommissionierauftrag berechnete Anzahl von Durchlaufkanäle definiert ist, bereitgestellt, gestaltet sich der Kommissioniervorgang einfacher und kann dieser effizienter durchgeführt werden. Die Lagerbehälter eines Kommissionierauftrages werden vorzugsweise abhängig von der Anzahl der zu entnehmenden Artikelpositionen möglichst nahe zu einer Halteposition für einen Auftragsbehälter bereitgestellt, sodass die Laufstrecke zwischen der zugewiesenen Kommissionierzone und einer Halteposition eines Auftragsbehälters optimiert ist. Die zu einem Kommissionierauftrag benötigten, unterschiedlichen Artikel sind innerhalb der Kommissionierzone zu einer Gruppe zusammengefasst, welche in zumindest einem Auftragsbehälter abgelegt werden. Es ist nicht erforderlich, dass ein Auftragsbehälter mehrere Kommissionier-Arbeitsplätze im ersten Kommissionierbereich durchlaufen muss, um alle Artikel zu einem Kommissionierauftrag zu erhalten. Dadurch werden die Transportstrecken für die Auftragsbehälter optimiert und wird auch die zweite Fördertechnik entlastet.

Auch können gemäß Anspruch 18 in den Kommissionierbereichen unterschiedlichste Kommissioniertechnologien verwendet werden, was gerade im Hinblick auf die Ergonomie der Kommissionier-Arbeitsplätze eine hohe Gestaltungsfreiheit erlaubt.

Von Vorteil ist auch die Ausgestaltung nach Anspruch 19, da der Kommissionier-Arbeitsplatz im ersten Kommissionierbereich sehr platzsparend im Behälterlager integriert ist.

Auch ist die Ausführung nach Anspruch 20 von Vorteil, weil dadurch der Kommissionier-Arbeitsplatz im zweiten Kommissionierbereich nach einer anderen Kommissioniertechnologie als am Kommissionier-Arbeitsplatz im ersten Kommissionierbereich aufgebaut werden kann.

Zum besseren Verständnis der Erfindung wird diese anhand der nachfolgenden Figuren näher erläutert.

Es zeigen jeweils in stark schematisch vereinfachter Darstellung:
- Fig. 1: die Umlagerebene einer erfindungsgemäßen Anlage zum Kommissionieren von Artikeln mit einer ersten Fördertechnik für Lagerbehälter;
- Fig. 2: die Kommissionierebene der erfindungsgemäßen Anlage zum Kommissionieren von Artikeln mit einer zweiten Fördertechnik für Auftragsbehälter;
- Fig. 3: eine Ansicht auf ein Lagerregal des Behälterlagers und ein Förderfahrzeug bei der Übergabe eines Lagerbehälters an einen der Kommissionier-Arbeitsplätze im ersten Kommissionierbereich;
- Fig. 4: einen Ausschnitt des Behälterlagers mit einem der Kommissionier-Arbeitsplätze im ersten Kommissionierbereich, in Seitenansicht;
- Fig. 5: eine Ausschnittsvergrößerung des Kommissionier-Arbeitsplatzes nach Fig. 4 mit den auf der linken Seite vorgesehenen Bereitstellungsbereichen;
- Fig. 6: eine vergrößerte Darstellung eines Sperranschlages und einer Betätigungsvorrichtung für den Sperranschlag in Seitenansicht;
- Fig. 7: eine Ausschnittsvergrößerung aus dem zweiten Kommissionierbereich mit mehreren Kommissionier-Arbeitsplätzen, in Draufsicht;
- Fig. 8: ein Kommissionier-Arbeitsplatz gemäß Fig. 7 in Seitenansicht;
- Fig. 9: wesentliche Verfahrensschritte eines Ausführungsbeispiels der Erfindung;
- Fig. 10: ein Flussdiagramm mit unterschiedlichen Verfahrensschritten für den Ablauf einer Dispositionsprüfung;
- Fig. 11: ein Flussdiagramm mit unterschiedlichen Verfahrensschritten für den Ablauf der Bereitstellung von Lagerbehältern in Bereitstellungsbereichen und Rücklagerung von Lagerbehältern in das Behälterlager.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

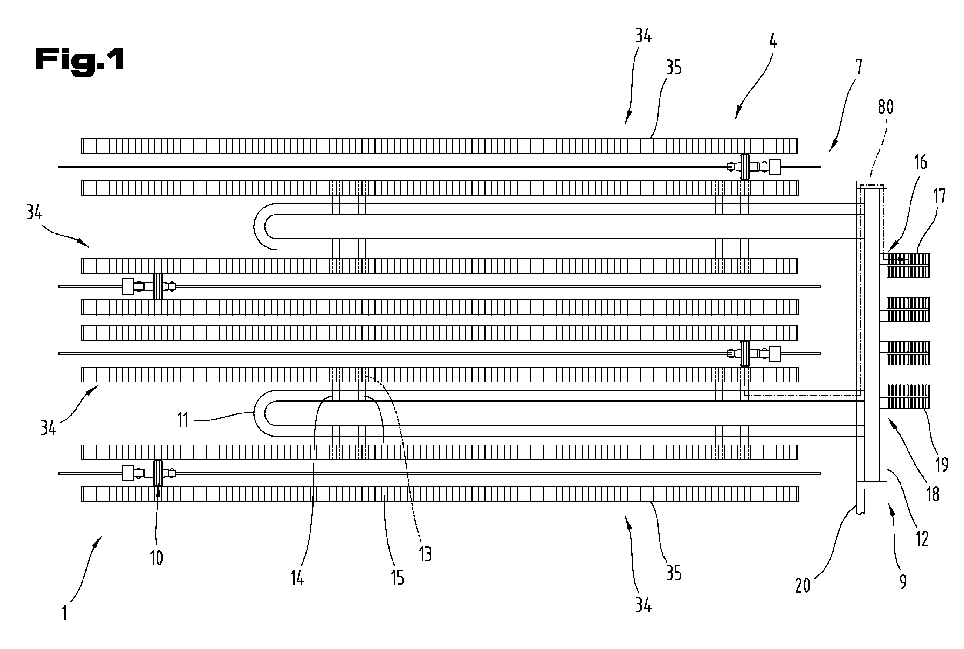

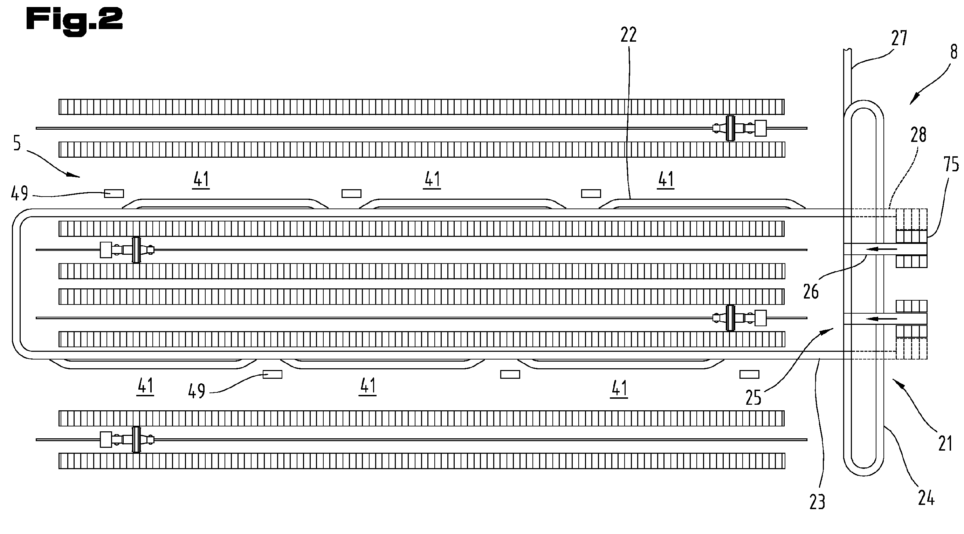

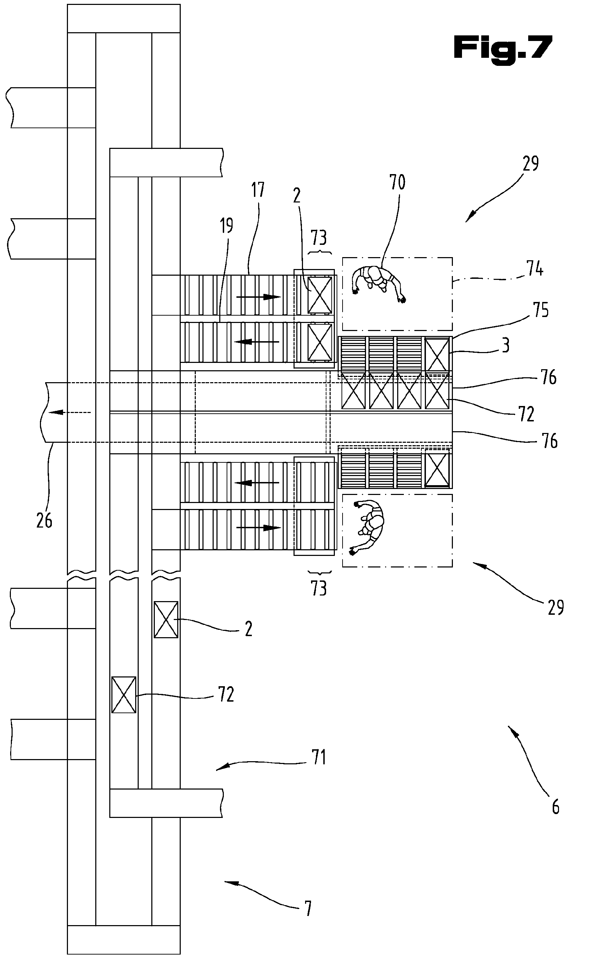

In den Fig. 1 bis 8 ist eine Anlage 1 zum Kommissionieren von Artikeln unterschiedlicher Umschlaghäufigkeit aus Lagerbehältern 2 in Auftragsbehälter 3 gezeigt. Die Anlage 1 umfasst ein Behälterlager 4, einen ersten Kommissionierbereich 5 (Fig. 1), einen zweiten Kommissionierbereich 6 (Fig. 7), eine erste Fördertechnik 7 für die Lagerbehälter 2 (Fig. 1) und eine zweite Fördertechnik 8 für die Auftragsbehälter 3 (Fig. 2).

Die automatisierte, erste Fördertechnik 7 umfasst in ihrem ersten Förderabschnitt ein Lagerbehälter-Verteilsystem 9 und in ihrem zweiten Förderabschnitt zumindest ein rechnergesteuertes Lagerbehälter-Förderfahrzeug 10, insbesondere ein Regalbediengerät, wobei die Lagerbehälter 2 mit dem Förderfahrzeug 10 zwischen dem Behälterlager 4 und dem Verteilsystem 9 gefördert werden. Das Verteilsystem 9 weist eine erste Förderumlaufbahn 11 und eine zweite Förderumlaufbahn 12, die miteinander verbunden sind. Wie den Fig. entnehmbar, ist das Verteilsystem 9 in einer Umlagerebene angeordnet. Die erste Fördertechnik 7 kann ferner Übergabeplätze 13 für Lagerbehälter 2 umfassen, die über Ausschleus- und Einschleusbahnen 14, 15 mit der ersten Förderumlaufbahn 11 verbunden sind. Die erste Förderumlaufbahn 11 umfasst zum einen, einen Ausschleusbereich, in welchem die Lagerbehälter 2 durch eine (nicht dargestellte) Ausschleusvorrichtung von der Förderumlaufbahn 11 auf die Einschleusbahn 15 gefördert werden, und zum anderen einen Einschleusbereich, in welchem die Lagerbehälter 2 durch eine (nicht dargestellte) Einschleusvorrichtung von der Ausschleusbahn 14 auf die Förderumlaufbahn 11 gefördert werden. Das Förderfahrzeug 10 kann aus dem Behälterlager 4 Lagerbehälter 2 entnehmen und auf den Übergabeplätzen 13 an die erste Fördertechnik 7 übergeben. Andererseits werden an den Übergabeplätzen 13 Lagerbehälter 2 bereitgestellt, ehe sie vom Förderfahrzeug 10 der ersten Fördertechnik 7 übernommen und in das Behälterlager 4 eingelagert werden.

Die zweite Förderumlaufbahn 12 umfasst zum einen Ausschleusbereiche 16, in welchen die Lagerbehälter 2 jeweils durch eine (nicht dargestellte) Ausschleusvorrichtung von der Förderumlaufbahn 12 in den zweiten Kommissionierbereich 6 auf eine Bereitstellungsbahn 17 gefördert werden, und zum anderen Einschleusbereiche 18, in welchen die Lagerbehälter 2 jeweils durch eine (nicht dargestellte) Einschleusvorrichtung aus dem zweiten Kommissionierbereich 6 von einer Förderbahn 19 auf die Förderumlaufbahn 12 gefördert werden.

Die Förderumlaufbahnen 11, 12 sind in einem Übergabebereich über zumindest eine (nicht dargestellte) Übergabevorrichtung miteinander verbunden. Die Lagerbehälter 2 werden im Übergabebereich durch eine Übergabevorrichtung von der ersten Förderumlaufbahn 11 auf die zweite Förderumlaufbahn 12 oder umgekehrt gefördert.

An das Verteilsystem 9 ist ferner eine Förderbahn 20 zum Antransport von mit Artikel befüllten Lagerbehältern 2 aus einem Wareneingang (Versorgungssystem) angeschlossen. Diese Lagerbehälter 2 werden über das Verteilsystem 9 zu einem der Übergabeplätze 13 gefördert und vom Förderfahrzeug 10 in das Behälterlager 4 eingelagert.

Die automatisierte, zweite Fördertechnik 8 umfasst ein Auftragsbehälter-Verteilsystem 21 und an dieses anschließende Kommissionier-Förderbahnen 22. Das Verteilsystem 21 weist nach gezeigter Ausführung eine erste Förderumlaufbahn 23 im ersten Kommissionierbereich 5 und eine zweite Förderumlaufbahn 24 im zweiten Kommissionierbereich 6, wobei sich die Kommissionier-Förderbahnen 22 jeweils über einen Förderabschnitt der ersten Förderumlaufbahn 23 parallel zu einer Regalfront erstrecken und mit der ersten Förderumlaufbahn 23 verbunden sind. Wie den Fig. entnehmbar, ist das Verteilsystem 21 in einer Kommissionierebene angeordnet.

Die erste Förderumlaufbahn 23 umfasst zum einen Ausschleusbereiche, in welchen die Auftragsbehälter 3 jeweils durch eine (nicht dargestellte) Ausschleusvorrichtung von der Förderumlaufbahn 23 auf die Kommissionier-Förderbahnen 22 in den ersten Kommissionierbereich 5 gefördert werden, und zum anderen Einschleusbereiche, in welchen die Auftragsbehälter 3 jeweils durch eine (nicht dargestellte) Einschleusvorrichtung von den Kommissionier-Förderbahnen 22 auf die Förderumlaufbahn 23 gefördert werden.

Die zweite Förderumlaufbahn 24 umfasst Einschleusbereiche 25, in welchen befüllte Auftragsbehälter 3 jeweils durch eine (nicht dargestellte) Einschleusvorrichtung von einer Förderbahn 26 aus dem zweiten Kommissionierbereich 6 auf die Förderumlaufbahn 24 rückgefördert werden.

Die Förderumlaufbahnen 23, 24 sind in einem Übergabebereich über zumindest eine (nicht dargestellte) Übergabevorrichtung miteinander verbunden. Die Auftragsbehälter 3 werden im Übergabebereich durch eine Übergabevorrichtung von der ersten Förderumlaufbahn 23 auf die zweite Förderumlaufbahn 24 oder umgekehrt gefördert.

An das Verteilsystem 21 ist ferner eine Förderbahn 27 zum Abtransport von mit Artikeln befüllten Auftragsbehältern 3 zu einem Warenausgang angeschlossen.

Die fertig kommissionierten Auftragsbehälter 3 können nun über das Verteilsystem 21 aus dem ersten Kommissionierbereich 5 oder dem zweiten Kommissionierbereich 6 zum Warenausgang gefördert werden. Sind zu einem Kommissionierauftrag aus dem ersten Kommissionierbereich 5 und dem zweiten Kommissionierbereich 6 Artikel nötig, können die Auftragsbehälter 3, nach der (Teil)Kommissionierung im zweiten Kommissionierbereich 6 über das Verteilsystem 21 zur (Teil)Kommissionierung in den ersten Kommissionierbereich 5 gefördert werden. Danach wird der zu einem Kommissionierauftrag alle benötigten Artikel enthaltende Auftragsbehälter 3 vom ersten Kommissionierbereich 6 zum Warenausgang gefördert.

Nach einer in Fig. 2 in strichlierte Linien eingetragenen Ausführung ist es auch möglich, dass das Verteilsystem 21 zusätzlich Förderbahnen 28 zum Transport von Auftragsbehältern 3 aufweist, wobei jede der Förderbahnen 28 mit einem Puffer 75 für Auftragsbehälter 3 (Fig. 7) verbunden ist und so auch zu einem Kommissionier-Arbeitsplatz 29 Auftragsbehälter 3 angefördert werden können. Der zumindest eine Kommissionier-Arbeitsplatz 29 ist außerhalb des Behälterlagers 2 vorgesehen. Die Auftragsbehälter 3 können über das Verteilsystem 21 aus dem ersten Kommissionierbereich 5 zu dem zweiten Kommissionierbereich 6 gefördert werden, wenn Artikel aus beiden Kommissionierbereichen 5, 6 benötigt werden. Nachdem der Kommissioniervorgang im zweiten Kommissionierbereich 6 abgeschlossen ist, wird der zu einem Kommissionierauftrag alle benötigten Artikel enthaltende Auftragsbehälter 3 über das Verteilsystem 21 vom zweiten Kommissionierbereich 5 zum Warenausgang gefördert.

Wie aus der Zusammenschau der Fig. 2 bis 4 ersichtlich, umfasst das Behälterlager 4 (Hochregallager) nach gezeigter Ausführung vier Regalblöcke 34. Andererseits kann das Behälterlager 4 auch nur einen oder zwei Regalblöcke 34 aufweisen. Das Behälterlager 4 bzw. der Regalblock 34 umfasst parallel angeordnete Lagerregale 35, in denen die Lagerbehälter 2 in doppelt tiefen Lagerkanälen 36 lagerbar sind. Zwischen den Lagerregalen 35 eines Regalblockes 34 ist eine Gasse 37 ausgebildet, in der zumindest ein Förderfahrzeug 10 verfahrbar ist. Das Förderfahrzeug 10 ist wiederum mit einer heb- und senkbaren Plattform 38 und mit einer darauf angeordneten Lastaufnahmevorrichtung 39, beispielsweise ein Teleskopförderer, ausgestattet, mittels welcher die Lagerbehälter 2 in die Lagerkanäle 36 eingelagert und aus den Lagerkanälen 36 ausgelagert werden können.

Die jeweils benachbarten Lagerregale 35 sind mit Abstand angeordnet, um hierzwischen Kommissioniergänge 40 zu schaffen, innerhalb der jeweils zumindest ein oder mehrere Kommissionier-Arbeitsplätze 41 vorgesehen sind. Der zumindest eine Kommissionier-Arbeitsplatz 41 ist im Behälterlager 2 integriert. Innerhalb des Kommissionierganges 40 bewegen sich Kommissionierpersonen 42 auf einer Tribüne 43.

Wie insbesondere aus Fig. 2 zu erkennen ist, bildet das Behälterlager 4 den ersten Kommissionierbereich 5 aus bzw. ist der erste Kommissionierbereich 5 im Behälterlager 4 integriert. Der erste Kommissionierbereich 5 umfasst zumindest einen oder gemäß gezeigter Ausführung mehrere Kommissionier-Arbeitsplätze 41. Die Kommissionier-Arbeitsplätze 41 sind jeweils räumlich eingeschränkte Arbeitsbereiche, innerhalb welcher von einer Kommissionierperson 42 Artikel, die in Lagerbehältern 2 bereitgestellt werden, entnimmt, um diese dann in bereitgestellte Auftragsbehälter 3 abzulegen. Beispielsweise befinden sich innerhalb eines Kommissionierganges 40 drei Kommissionier-Arbeitsplätze 41. Die Kommissionier-Arbeitsplätze 41 sind über das Verteilsystem 21 miteinander verbunden, sodass die Auftragsbehälter 3 zum Abarbeiten eines Kommissionierauftrages auch zu mehreren Kommissionier-Arbeitsplätzen 41 gefördert werden können.

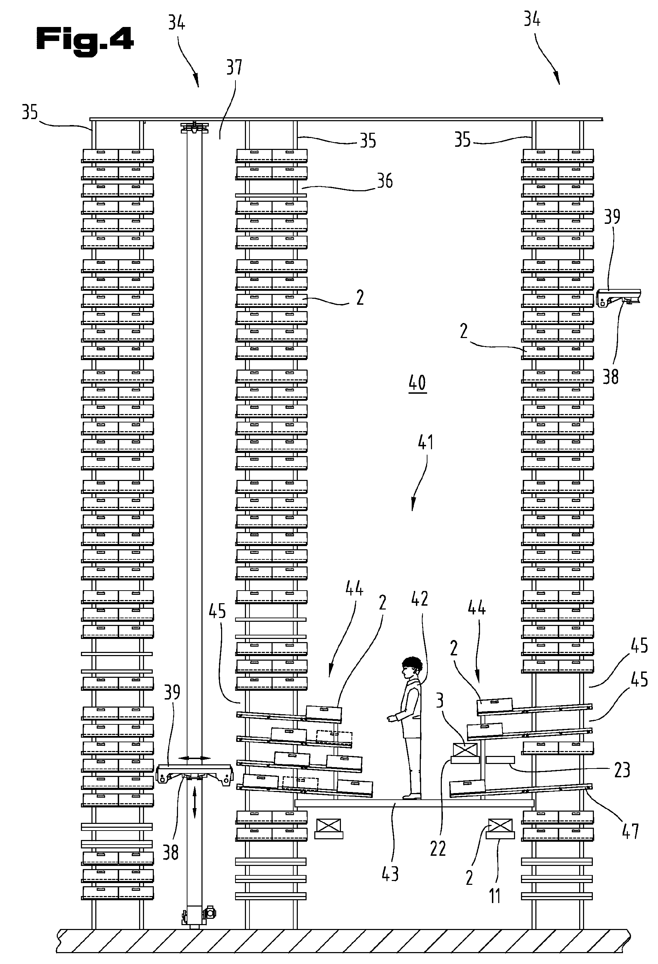

Jeder Kommissionier-Arbeitsplatz 41 (Kommissionierbahnhof) umfasst eine Vielzahl von Bereitstellungsbereichen 44 für Lagerbehälter 2 und eine über die (nicht dargestellten) Ausschleus- und Einschleusvorrichtungen mit dem Verteilsystem 21 verbundene Förderbahn 22 für Auftragsbehälter 3. Die Bereitstellungsbereiche 44 eines Kommissionier-Arbeitsplatzes 41 sind gemäß der Darstellung in Fig. 4 im linken Lagerregal 35, beispielsweise in vier Ebenen übereinander und im rechten Lagerregal 35, beispielsweise in drei Ebenen übereinander angeordnet. Die Bereitstellungsbereiche 44 bzw. Bereitstellplätze 44a sind in jeder Ebene über die gesamte Länge eines Kommissionier-Arbeitsplatzes 41 nebeneinander angeordnet.

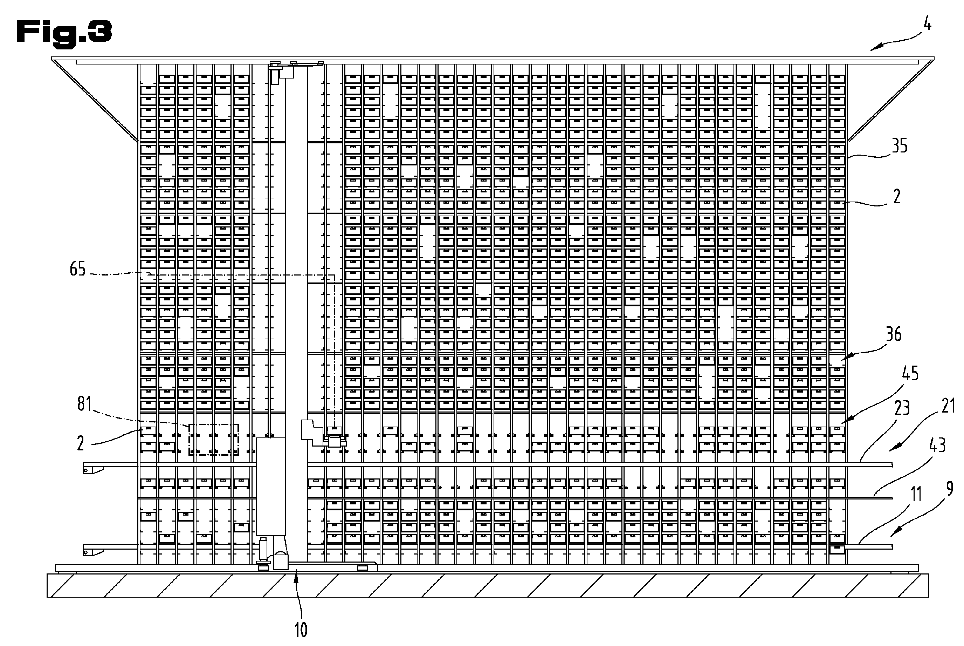

Wie in den Fig. 3 und 4 ersichtlich, sind die Bereitstellungsbereiche 44 an Durchlaufkanälen 45 ausgebildet, daher im Lagerregal 35 des Behälterlagers 4 integriert.

Jeder Durchlaufkanal 45 umfasst einen vom Förderfahrzeug 10, insbesondere von der Lastaufnahmevorrichtung 39 zugänglichen Übergabebereich 46 mit zumindest einem Übergabeplatz 46a, einen Bereitstellungsbereich 44 mit zumindest einem Bereitstellplatz 44a und eine in Richtung zum Bereitstellungsbereich 44 geneigt nach unten verlaufenden Transportvorrichtung (Rollenbahn) 47. Vorzugsweise wird der Bereitstellplatz 44a und Übergabeplatz 46a an der Transportvorrichtung 47 ausgebildet. Am vorderen Ende der Transportvorrichtung 47 ist ein Anschlag 61 vorgesehen, gegen den ein Lagerbehälter 3 anliegt, wenn er sich auf dem Bereitstellplatz 44a befindet. Vorzugsweise ist die Transportvorrichtung 47 durch eine nicht angetriebene Rollenbahn gebildet, auf der ein Lagerbehälter 2 aufgrund der Schwerkraft vom Übergabeplatz 46a zum Bereitstellplatz 44a gleiten kann. Innerhalb eines Durchlaufkanals 45 werden die Artikel "sortenrein" in den Lagerbehältern 2 bereitgestellt.

Jeder Kommissionier-Arbeitsplatz 41 umfasst ferner eine Ein- und/oder Ausgabevorrichtung 49 (Fig. 2), mittels welcher die Kommissionierperson 42 hinsichtlich der einzelnen Kommissioniervorgänge geführt wird, beispielsweise sind an den einzelnen Durchlaufkanälen 45 Fachanzeigen vorgesehen, an denen die Entnahmemenge angezeigt wird. Auch kann an der Ein- und/oder Ausgabevorrichtung 49 durch die Kommissionierperson 42 das Ende eines Kommissioniervorganges quittiert werden.

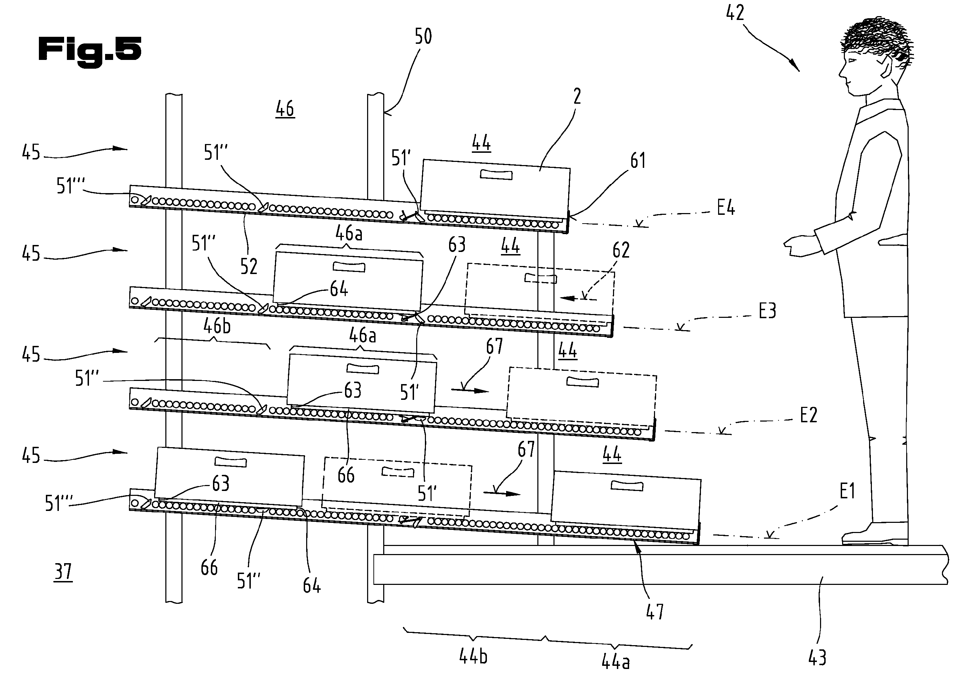

In Fig. 5 ist ein Ausschnitt aus dem Behälterlager 4 mit den in diesem integriert angeordneten Bereitstellungsbereichen 44 gezeigt. Die Bereitstellungsbereiche 44 umfassen jeweils zumindest einen Bereitstellplatz 44a und sind, wie oben beschrieben, an den Durchlaufkanälen 45 ausgebildet und an jedem der Durchlaufkanäle 45 vorgesehen. Außerdem ist an jedem der Durchlaufkanäle 45 ein Übergabebereich 46 vorgesehen, der zumindest einen Übergabeplatz 46a oder hintereinander zwei Übergabeplätze 46a, 46b ausbildet. Die Bereitstellplätze 44a an den Durchlaufkanälen 45 in den oberen drei Ebenen E2-E4 können in Längsrichtung der Transportvorrichtung 47 jeweils einen Lagerbehälter 2 aufnehmen. Die Übergabebereiche 46 an den Durchlaufkanälen 45 in den vier Ebenen E1-E4 können in Längsrichtung der Transportvorrichtung 47 jeweils hintereinander zwei Lagerbehälter 2 aufnehmen. In gezeigter Ausführung ist an jedem der in unterster Ebene E1 verlaufenden Durchlaufkanäle 45 im Bereitstellungsbereich 44 ein vorderer Bereitstellplatz 44a für einen ersten Lagerbehälter 2 und hinterer Bereitstellplatz 44b für einen zweiten Lagerbehälter 2 ausgebildet. Der hintere Bereitstellplatz 44b bildet einen Speicherplatz für zumindest einen Lagerbehälter 2 aus.

Die Transportvorrichtungen 47 bzw. die Durchlaufkanäle 45 weisen in den übereinander liegenden Ebenen E1-E4 unterschiedliche Längen auf. Vorzugsweise sind die in übereinander liegenden Ebenen und nebeneinander angeordneten Bereitstellungsbereiche 44 bzw. Bereitstellplätze 44a gegenüber einer parallel zur Regalfront 50 verlaufenden Vertikalebene in Richtung zum Übergabeplatz 46a derart versetzt, dass die Artikel, welche an den Bereitstellplätzen 44a in den Lagerbehältern 2 angeboten werden, von der Kommissionierperson 42 gut zugänglich sind.

Wie in Fig. 5 eingetragen, sind sämtliche Durchlaufkanäle 45 an einem Kommissionier-Arbeitsplatz 41 mit Sperranschlägen 51 ausgestattet, die jeweils zwischen einer an der Transportebene der Lagerbehälter 2 vorragenden Ausgangsstellung und einer unter die Transportebene der Lagerbehälter 2 abgesenkten Betätigungsstellung bewegbar sind. Die Sperranschläge 51 sind an einem Rahmen 52 der Transportvorrichtung 47 gelagert und werden durch Federkraft oder Gewichtskraft selbsttätig in der Ausgangsstellung gehalten.

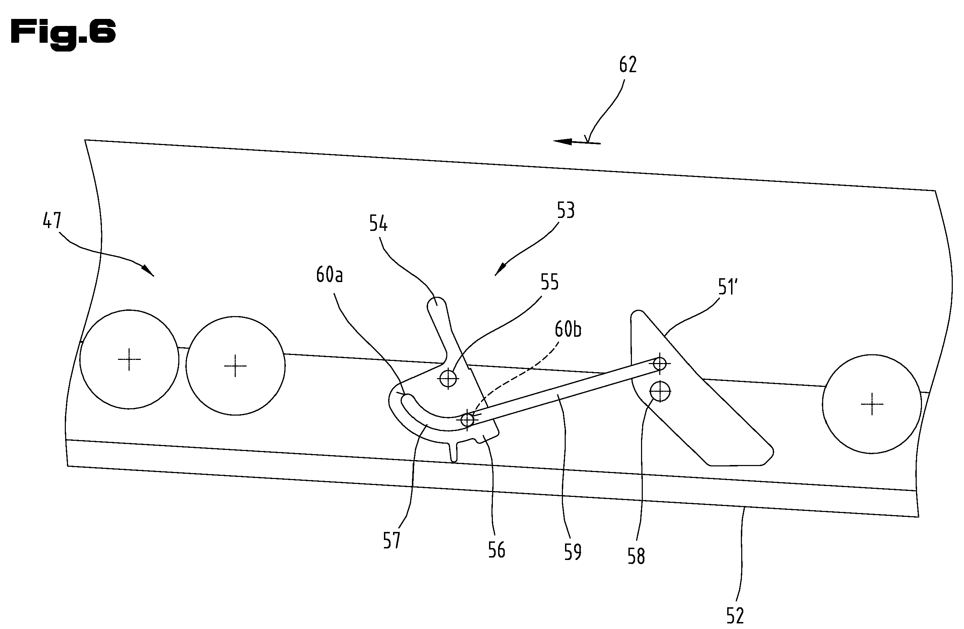

Der dem Bereitstellplatz 44a benachbarte Sperranschlag 51' in jedem Durchlaufkanal 45 in den Ebenen E1-E4 kann mit einer Betätigungsvorrichtung 53 zusammenwirken, wie in Fig. 6 schematisch dargestellt. Die Betätigungsvorrichtung 53 umfasst einen Betätigungshebel 54, eine Schwenkachse 55 und einen exzentrisch zur Schwenkachse 55 ausgebildeten Massekörper 56. Die Betätigungsvorrichtung 53 ist über die Schwenkachse 55 am Rahmen 52 gelagert. Im Massekörper 56 ist eine im radialen Abstand zur Schwenkachse 55 bogenförmig verlaufende Führungskulisse 57 angeordnet. Der Betätigungshebel 54 ist zwischen einer an der Transportebene der Lagerbehälter 2 vorragenden Ausgangsstellung und einer unter die Transportebene der Lagerbehälter 2 abgesenkten Betätigungsstellung bewegbar.

Der Sperranschlag 51' umfasst eine Schwenkachse 58, über welche der Sperranschlag 51' am Rahmen 52 gelagert ist. Ein Gestänge 59 ist mit seinem ersten Ende gelenkig mit dem Sperranschlag 51' und mit seinem zweiten Ende in der Führungskulisse 57 zwischen Anschlagflächen 60a, 60b geführt.

In Fig. 5 befindet sich in der Ebene E4 ein Lagerbehälter 2 auf einem Bereitstellplatz 44a, wobei eine Bereitstellposition durch einen festen Anschlag 61 definiert ist. In der Bereitstellposition kann die Kommissionierperson 42 die Artikel gemäß einem Kommissionierauftrag in der entsprechenden Stückzahl aus dem Lagerbehälter 2 entnehmen. Die Sperranschläge 51 werden in deren Ausgangsstellung selbsttätig durch Federkraft oder Gewichtskraft gehalten.

In der Ebene E3 wird die Rücklagerung eines Lagerbehälters 2 vom Bereitstellplatz 44a in einen Lagerkanal 36 gezeigt. Dabei wird vorerst der Lagerbehälter 2 aus seiner in strichlierte Linien eingetragenen Bereitstellposition am Bereitstellplatz 44a in die in feste Linien eingetragene Übergabeposition am Übergabeplatz 46a bewegt, siehe Pfeil 62. Dies geschieht bevorzugt durch eine Kommissionierperson 42 am Kommissionier-Arbeitsplatz 41. Auf der Bewegung des Lagerbehälters 2 von der Bereitstellposition in die Übergabeposition wird der Sperranschlag 51' überfahren und aus seiner Ausgangsstellung oberhalb der Transportebene in die Betätigungsstellung unterhalb der Transportebene verstellt. Dabei wird das Gestänge 59 mit seinem zweiten Ende in der Führungskulisse 57 in Richtung auf die Anschlagfläche 60a geführt bewegt. Überfährt der Lagerbehälter 2 nun auch den Betätigungshebel 54, wird dieser um die Lagerachse 55 verschwenkt und aus seiner Ausgangsstellung oberhalb der Transportebene in die Betätigungsstellung unterhalb der Transportebene verstellt. Dabei wird das Gestänge 59 mit seinem zweiten Ende in der Führungskulisse 57 maximal bis zur Anschlagfläche 60a geführt bewegt. Die Länge der Führungskulisse 57 ist so gewählt, dass während der Bewegung des Betätigungshebels 54 aus der Ausgangsstellung in die Betätigungsstellung zwischen dem Massekörper 56 und dem Gestänge 59 eine Relativbewegung ausgeführt werden kann.

Hat der Lagerbehälter 2 mit seiner Hinterkante 63 relativ zur Bewegungsrichtung 62 den Sperranschlag 51' passiert, wird dieser entkoppelt von der Betätigungsvorrichtung 53 durch Federkraft oder Gewichtskraft selbsttätig in der Ausgangsstellung bewegt und in dieser gehalten.

Wie in Fig. 5, Ebene E3 ersichtlich, ist der Sperranschlag 51" in der Ausgangsstellung oberhalb der Transportebene, sodass der Lagerbehälter 2 mit seiner Vorderkante 64 relativ zur Bewegungsrichtung 62 am Sperranschlag 51" aufläuft, wenn er mit einer entsprechenden Bewegungsenergie in Richtung auf den Übergabeplatz 46a bewegt wird. Danach wird der Lagerbehälter 2 zwischen den Sperranschlägen 51', 51" in Richtung auf den Sperranschlag 51' bewegt und läuft mit seiner Hinterkante 63 am Sperranschlag 51' auf. Der Betätigungshebel 54 wird durch die Gewichtskraft des Lagerbehälters 2 fortwährend in der Betätigungsstellung gehalten.

Der noch teilweise befüllte Lagerbehälter 2 ist somit am Übergabeplatz 46a zwischen den Sperranschlägen 51', 51" mit ausreichend hoher Genauigkeit positioniert, sodass die Lastaufnahmevorrichtung 39 den Lagerbehälter 2 zuverlässig übernehmen kann. Anschließend wird der noch teilweise befüllte Lagerbehälter 2 auf das Förderfahrzeug 10 (Fig. 1 bis 4) übernommen und von diesem in einen Lagerkanal 36 eingelagert.

Die oben beschriebene Betätigungsvorrichtung 53 ermöglicht unterschiedliche Möglichkeiten für den Bereitstellvorgang von Lagerbehältern 2.

Beim Bereitstellvorgang wird der Lagerbehälter 2 von der Lastaufnahmevorrichtung 39 aus einem Lagerkanal 36 ausgelagert und auf das Förderfahrzeug 10 (Fig. 1 bis 4) übernommen. Gemäß der Erfindung können die aus den Lagerkanälen 36 ausgelagerten Lagerbehälter 2 vom Förderfahrzeug 10 entsprechend einer noch näher zu beschreibenden Dispositionsprüfung/Dispositionsaufgabe entlang unterschiedlicher Förderwege 65, 80 gefördert werden. Wird ein Lagerbehälter 2 gemäß der Dispositionsprüfung/Dispositionsaufgabe dem ersten Kommissionierbereich 5 zugewiesen, wird dieser entlang eines ersten Förderweges 65 (Fig. 3) zwischen einem vom Lagerverwaltungssystem (Rechner) ermittelten Lagerkanal 36 bzw. einer Lagerposition für einen Lagerbehälter 2 und einem vom Lagerverwaltungssystem (Rechner) ermittelten Bereitstellungsbereich 44 zu einem der Kommissionier-Arbeitsplätze 41 bzw. Durchlaufkanäle 45 gefördert.

Dort angekommen, wird der Lagerbehälter 2 von der Lastaufnahmevorrichtung 39 an den Übergabebereich 46 entweder auf einen vorderen Übergabeplatz 46a oder hinteren Übergabeplatz 46b relativ zu einer Bewegungsrichtung 67 des Lagerbehälters 2 abgegeben.

Nach der ersten Ausführung wird der Lagerbehälter 2 derart auf den vorderen Übergabeplatz 46a abgegeben, dass der Lagerbehälter 2 mit seinem Boden 66 auf den in seiner Ausgangstellung gehaltenen Sperranschlag 51' und den in seiner Ausgangstellung gehaltenen Betätigungshebel 54 aufgesetzt wird, wie in Fig. 5, Ebene E2 dargestellt.

Durch die Gewichtskraft des Lagerbehälters 2 werden der Sperranschlag 51' und der Betätigungshebel 54 jeweils in die Betätigungsstellung unterhalb der Transportebene bewegt.

Der Lagerbehälter 2 wird nach dem Abstellen auf die Transportvorrichtung 47 aus seiner in feste Linien eingetragenen Übergabeposition am Übergabeplatz 46a (Übergabebereich) in die in strichlierte Linien eingetragene Bereitstellposition am Bereitstellplatz 44a bewegt, siehe Pfeil 67. Dies geschieht bevorzugt alleinig aufgrund der Schwerkraft.

Hat der Lagerbehälter 2 mit seiner Hinterkante 63 relativ zur Bewegungsrichtung 67 den Betätigungshebel 54 passiert, wird dieser durch den Massekörper 56 selbsttätig in die Ausgangsstellung bewegt und in dieser gehalten. Der Sperranschlag 51' bleibt währenddessen noch in der Betätigungsstellung. Passiert nun der Lagerbehälter 2 mit seiner Hinterkante 63 auch den Sperranschlag 51', wird dieser durch Federkraft oder Gewichtskraft selbsttätig in der Ausgangsstellung bewegt und in dieser gehalten. Dabei wird das Gestänge 59 mit seinem zweiten Ende in der Führungskulisse 57 in Richtung auf die Anschlagfläche 60b geführt bewegt.

Nach der zweiten Ausführung wird der Lagerbehälter 2 auf den hinteren Übergabeplatz 46b abgegeben und bewegt sich in Richtung auf den Bereitstellplatz 44a, wie in Fig. 5, Ebene E1 dargestellt. Der Lagerbehälter 2 wird mit seinem Boden 66 auf den in seiner Ausgangstellung gehaltenen Sperranschlag 51" aufgesetzt und in die Betätigungsstellung bewegt.

Überfährt der in strichlierte Linien eingetragene Lagerbehälter 2 nun mit seiner Vorderkante 64 relativ zur Bewegungsrichtung 67 den Betätigungshebel 54, wird dieser in die Betätigungsstellung bewegt und durch die Bewegungskoppelung zwischen dem Sperranschlag 51 und der Betätigungsvorrichtung 53 auch der Sperranschlag 51' in die Betätigungsstellung bewegt. Dabei wird das Gestänge 59 mit seinem zweiten Ende gegen die Anschlagfläche 60b der Führungskulisse angelegt.

Hat der Lagerbehälter 2 mit seiner Hinterkante 63 den Betätigungshebel 54 und den Sperranschlag 51' passiert, werden diese durch den Massekörper 56 bzw. Feder- oder Gewichtskraft jeweils selbsttätig in die Ausgangsstellung bewegt und in dieser gehalten.

Da sich im Durchlaufkanal 45 in der Ebene E1 bereits ein Lagerbehälter 2 befindet, läuft der zugeführte Lagerbehälter 2 auf den bereits bereitgestellten Lagerbehälter 2 auf.

Der Sperranschlag 51''' dient der Begrenzung des Durchlaufkanales 45 gegenüber der Gasse 37, um sicherzustellen, dass ein Lagerbehälter 2 nie in die Gasse 37 hinabstürzen kann.

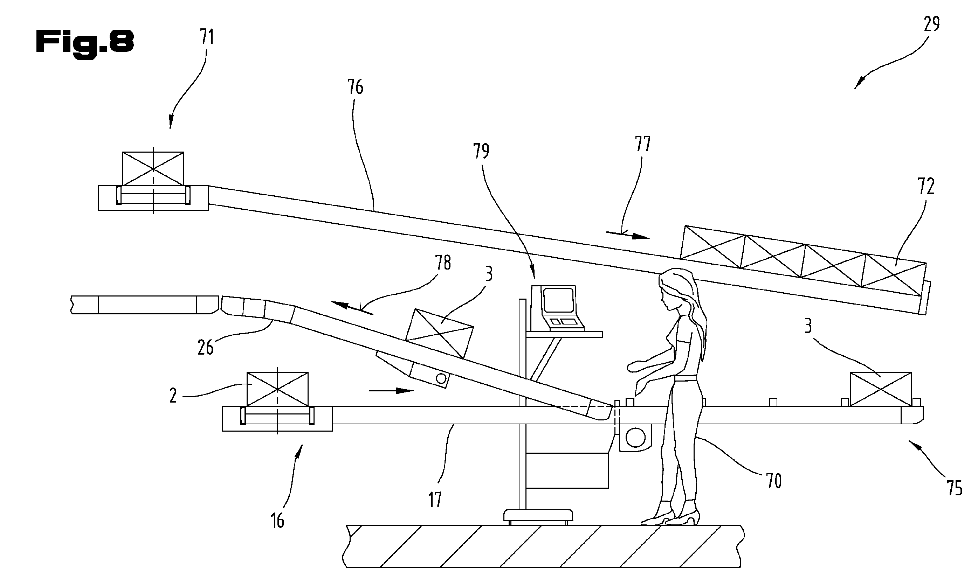

In den gemeinsam beschriebenen Fig. 7 und 8 ist der zweite Kommissionierbereich 6 gezeigt, in welchem mehrere Kommissionier-Arbeitsplätze 29 zum Kommissionieren von Artikeln aus Lagerbehältern 2 in Auftragsbehälter 3 durch Kommissionierpersonen 70 vorgesehen sind. Die Kommissionier-Arbeitsplätze 29 sind an die erste Fördertechnik 7 für die Lagerbehälter 2 und die zweite Fördertechnik 8 für die Auftragsbehälter 3 (Fig. 2) angeschlossen. Ferner können die Kommissionier-Arbeitsplätze 29 an eine dritte Fördertechnik 71 für Leerbehälter 72 anschließen. Die Kommissionier-Arbeitsplätze 29 werden jeweils von einer Kommissionierperson 70 bedient, die sich in einem Arbeitsbereich 74 aufhält und in diesem Arbeitsbereich 74 agiert. Der Arbeitsbereich 74 kann beispielsweise durch die Armreichweite der Kommissionierperson 70 definiert sein. Vorzugsweise muss sich die Kommissionierperson 70 kaum von ihrem Standort wegbewegen, um zu kommissionierende Artikel aus den Lagerbehältern 2 entnehmen und in die Auftragsbehälter 3 ablegen zu können.

Jeder Kommissionier-Arbeitsplatz 29 umfasst einen Bereitstellungsbereich 73 mit zumindest einem oder mehreren Bereitstellungsplätzen für Lagerbehälter 2, einen Puffer 75 für Auftragsbehälter 3, zumindest eine Förderbahn 76 für Leerbehälter 72 und eine Förderbahn 26 für Auftragsbehälter 3. Die Leerbehälter 72 werden von der dritten Fördertechnik 71 auf die Förderbahn(en) 76 ausgeschleust. Die Förderbahn 76 ist, beispielsweise durch eine in Förderrichtung 77 der Leerbehälter 72 geneigt nach unten verlaufende Rollenbahn gebildet, sodass die Leerbehälter 72 aufgrund der Schwerkraft in den Arbeitsbereich 74 gefördert werden. Die Förderbahn 26 ist, beispielsweise durch einen in Förderrichtung 78 geneigt nach oben verlaufenden, angetriebenen Bandförderer gebildet, mit dem die Auftragsbehälter 3 aus dem Arbeitsbereich 74 abgefördert und anschließend in das Verteilsystem 21 der zweiten Fördertechnik 8 eingeschleust werden.

Die Lagerbehälter 2 werden von der Bereitstellungsbahn 17 in Förderrichtung (Pfeil) vom Verteilsystem 9 der ersten Fördertechnik 7 (Fig. 2) in den Arbeitsbereich 74 angefördert und ein noch teilweise gefüllter Lagerbehälter 2 von der Förderbahn 19 in Förderrichtung (Pfeil) aus dem Arbeitsbereich 74 zum Verteilsystem 9 der ersten Fördertechnik 7 abgefördert. Der noch teilweise gefüllte Lagerbehälter 2 kann über das Verteilsystem 9 zu einem Übergabeplatz 13 gefördert werden, von welchem der Lagerbehälter 2 vom Förderfahrzeug 10 übernommen und wiederum in einen Regalkanal eingelagert wird. Die Bereitstellungsbahn 17 und Förderbahn 19 sind jeweils beispielsweise durch eine angetriebene Rollenbahn oder Bandförderer und dgl. gebildet.

Der Bereitstellungsbereich 73 ist an der Bereitstellungsbahn 17 und/oder Förderbahn 19 ausgebildet, auf welchem ein oder mehrere Lagerbehälter 2 bereitgestellt werden können.

Der Puffer 75 weist im hier gezeigten Beispiel vier Pufferplätze auf, von denen lediglich ein Pufferplatz mit einem Auftragsbehälter 3 belegt ist. Jeder Pufferplatz umfasst eine Rollenbahn, um die Manipulation der Auftragsbehälter 3 zwischen dem Puffer 75 und der Förderbahn 26 zu erleichtern.

Jeder Kommissionier-Arbeitsplatz 29 umfasst ferner eine Ein- und/oder Ausgabevorrichtung 79, mittels welcher die Kommissionierperson 70 hinsichtlich der einzelnen Kommissioniervorgänge geführt wird, beispielsweise wird die Entnahmemenge an Artikel aus dem Lagerbehälter 2 angezeigt. Auch kann an der Ein- und/oder Ausgabevorrichtung 79 durch die Kommissionierperson 70 das Ende eines Kommissioniervorganges quittiert werden.

Beim Bereitstellvorgang von Lagerbehältern 2 an einem der Kommissionier-Arbeitsplätze 29 im zweiten Kommissionierbereich 6 wird beispielsweise ein Lagerbehälter 2 von der Lastaufnahmevorrichtung 39 aus einem Lagerkanal 36 ausgelagert und auf das Förderfahrzeug 10 (Fig. 1 bis 4) übernommen. Gemäß der Erfindung können die aus den Lagerkanälen 36 ausgelagerten Lagerbehälter 2 vom Förderfahrzeug 10 entsprechend einer noch näher zu beschreibenden Dispositionsprüfung entlang unterschiedlicher Förderwege 65, 80 gefördert werden.

Wird ein Lagerbehälter 2 gemäß der Dispositionsprüfung dem zweiten Kommissionierbereich 6 zugewiesen, wird dieser entlang eines zweiten Förderweges 80 (Fig. 1) zwischen einem vom Lagerverwaltungssystem (Rechner) ermittelten Lagerkanal 36 bzw. einer Lagerposition für einen Lagerbehälter 2 und einem vom Lagerverwaltungssystem (Rechner) ermittelten Bereitstellungsbereich 73 zu einem der Kommissionier-Arbeitsplätze 29 gefördert.

Dort angekommen, kann die Kommissionierperson 70 die Artikel gemäß einem Kommissionierauftrag in der entsprechenden Stückzahl aus einem oder mehreren Lagerbehältern 2 entnehmen und in einen oder mehrere Auftragsbehälter 3 ablegen. Ist ein neuer Auftragsbehälter 3 erforderlich, wird von der Kommissionierperson 70 ein Leerbehälter 72 von der Förderbahn 76 entfernt und auf einen freien Pufferplatz abgesetzt.

Sind alle für einen Kommissionierauftrag benötigten Artikel in einem Auftragsbehälter 3 abgelegt worden, wird der Auftragsbehälter 3 von der Kommissionierperson 70 vom Pufferplatz auf die Förderbahn 26 abgeschoben und von dieser zum Verteilsystem 21 gefördert.

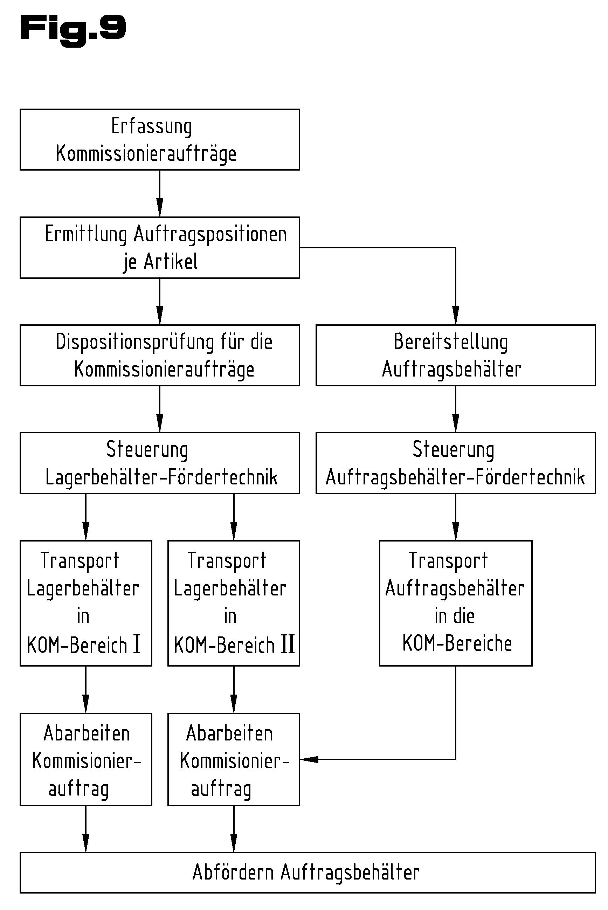

Im nachfolgenden wird anhand der Fig. 9 das erfindungsgemäße Verfahren zur Bereitstellung von Lagerbehältern 2 an einem Kommissionier-Arbeitsplatz 41 im ersten Kommissionierbereich 5 (KOM-Bereich I) und einem Kommissionier-Arbeitsplatz 29 im zweiten Kommissionierbereich 6 (KOM-Bereich II) beschrieben.

In einem ersten Verfahrensschritt werden an einem (nicht dargestellten) Rechner des Lagerverwaltungssystems Kommissionieraufträge elektronisch erfasst. Ein Kommissionierauftrag kann einen oder mehrere Auftragsbehälter 3 (Versandbehälter) umfassen. Aufgrund der Kommissionieraufträge werden in einem Verfahrensschritt in einer Auftragsvorausschau die Artikelpositionen zu jedem Artikel ermittelt. Die Auftragsvorausschau definiert ein Zeitfenster bzw. eine Anzahl von Kommissionieraufträgen/Auftragsdaten. Unter Artikelposition wird die Anzahl der für einen Kommissionierauftrag benötigten Artikel eines Artikeltyps verstanden, welche zu diesem Kommissionierauftrag kommissioniert werden sollen. Anhand eines Kommissionierauftrages wird nun auch in einem Verfahrensschritt die Anzahl der Auftragsbehälter 3 ermittelt und diese an den Kommissionier-Arbeitsplätzen 29, 41 entsprechend bereitgestellt.

Im nächsten Verfahrensschritt werden vom Rechner in einer Dispositionsprüfung die Bereitstellungsbereiche 44, 73 ermittelt, zu welchen die Lagerbehälter 2 gefördert werden sollen. Die Dispositionsprüfung wird von einer Programmlogik, insbesondere einem Computerprogramm ausgeführt, welches auf dem Rechner läuft bzw. gespeichert ist.

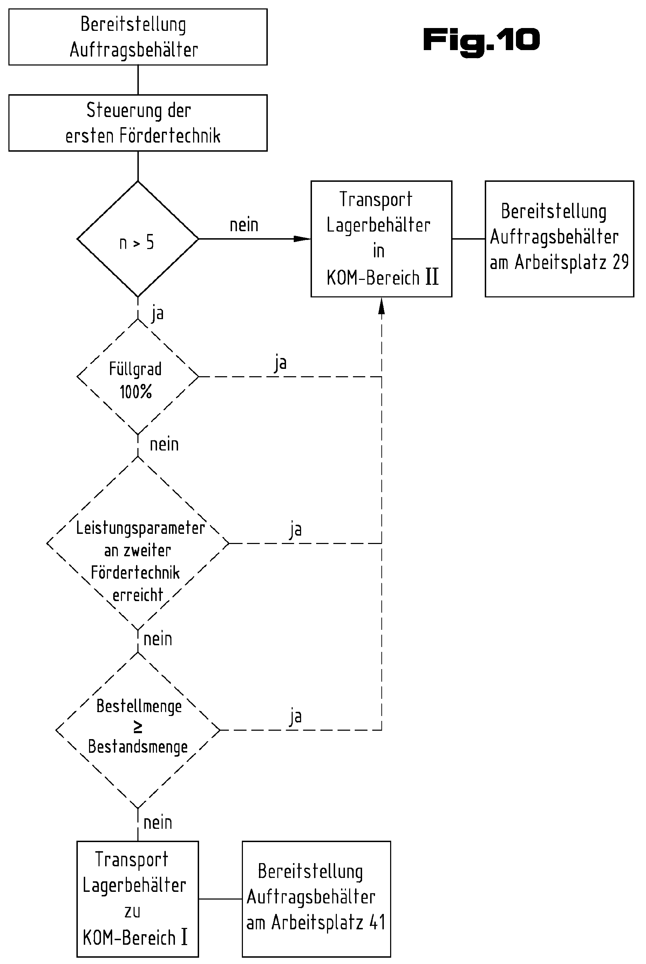

In der Dispositionsprüfung, wie sie in Fig. 10 im Flussdiagramm abgebildet ist, können auf Basis von zumindest einem Zuweisungskriterium die Lagerbehälter 2 den betreffenden Kommissionierbereichen 5, 6 zugewiesen und entlang unterschiedlicher Förderwege 65, 80 gefördert werden.

Ein erstes Zuweisungskriterium ist die Anzahl an Auftragspositionen "n", welche vom Rechner nach Erfassung eines Kommissionierauftrages ermittelt wurden, zu je einem Artikel, beispielsweise Liedertextheft, Gitarrenseite, Stimmgerät, Zubehör und dgl.. Unter Auftragsposition kann die Anzahl von Artikeln, welche zu einem Kommissionierauftrag benötigt werden, verstanden werden. Beispielsweise werden für einen Kommissionierauftrag 20 Stk. Liedertexthefte benötigt. Der am Rechner erfasste Istwert für die Anzahl an Auftragspositionen eines Artikels wird mit einem am Rechner hinterlegten Grenzwert für Auftragspositionen eines Artikels verglichen. Der Rechner wertet den Vergleich aus und führt die Zuweisung des Lagerbehälters 2 zu einem der Bereitstellungsbereiche 44, 73 durch. Der Grenzwert für Auftragspositionen kann beliebig gewählt werden, beispielsweise fünf. Liegt der Istwert für die Anzahl an Auftragspositionen (20 Stk. Liedertexthefte) oberhalb des Grenzwertes für Auftragspositionen (5 Stk. Artikel) wird die erste Fördertechnik 7, insbesondere das Förderfahrzeug 10 derart gesteuert, dass der Lagerbehälter 2 entlang des ersten Förderweges 65 in den ersten Kommissionierbereich 5 gefördert und an einem der Bereitstellungsbereiche 44 bzw. Bereitstellplätze 44a bereitgestellt wird. Dort angekommen, kann die Kommissionierperson 42 den Kommissioniervorgang beginnen.

Liegt der Istwert für die Anzahl an Auftragspositionen (2 Stk. Liedertexthefte) unterhalb des Grenzwertes für Auftragspositionen (5 Stk. Artikel) wird die erste Fördertechnik 7, insbesondere das Förderfahrzeug 10 derart gesteuert, dass der Lagerbehälter 2 entlang des zweiten Förderweges 80 in den zweiten Kommissionierbereich 6 gefördert und an einem der Bereitstellplätze 73 bereitgestellt wird. Dort angekommen, kann die Kommissionierperson 70 den Kommissioniervorgang beginnen.

Durch diese Maßnahme ist eine eindeutige Zuteilung der Artikel auf die Kommissionierbereiche 5, 6 möglich. Artikel hoher Umschlaghäufigkeit werden im ersten Kommissionierbereich 5 und Artikel niedriger Umschlaghäufigkeit im zweiten Kommissionierbereich 6 kommissioniert.

Andererseits kann unter Auftragsposition auch der zu kommissionierende Artikeltyp verstanden werden. Beispielweise kann ein erster Artikeltyp aufgrund seiner (großen) Abmessungen nicht an den Bereitstellungsbereichen 44 am Kommissionier-Arbeitsplatz 41 transportiert werden. In diesem Fall muss in der Dispositionsprüfung für die Artikel der Lagerbehälter 2, welcher diesen ersten Artikeltyp enthält, nicht dem ersten Kommissionierbereich 5, sondern dem zweiten Kommissionierbereich 6 zugewiesen werden. Dabei wird der Lagerbehälter 2 entlang dem zweiten Förderweg 80 der ersten Fördertechnik 7 in den zweiten Kommissionierbereich 6 zum Kommissionier-Arbeitsplatz 29 transportiert und am Bereitstellungsbereich 73 bereitgestellt. Hingegen kann ein zweiter Artikeltyp aufgrund seiner (kleinen) Abmessungen zum Kommissionier-Arbeitsplatz 41 transportiert und an einem der Bereitstellungsbereiche 44 bereitgestellt werden.

Ein zweites Zuweisungskriterium ist der Füllgrad (0% = unbelegt, 100% = belegt) an einem Kommissionier-Arbeitsplatz 41 im ersten Kommissionierbereich 5. Dabei kann an einem Kommissionier-Arbeitsplatzes 41 der Füllgrad entweder durch die Aufnahmekapazität von Lagerbehältern 2 in einem Bereitstellungsbereich 44 (Bereitstellplatz 44a, 44b) jedes Durchlaufkanales 45 und/oder durch die Aufnahmekapazität von Lagerbehältern 2 innerhalb eines jeden Durchlaufkanales 45, insbesondere auf den Bereitstellungs- und Übergabebereich 44, 46 definiert werden. Der Füllgrad kann vom Rechner laufend erfasst werden, nachdem der Rechner auch die Funktion eines Materialflussrechners realisiert. Der vom Rechner erfasste Füllgrad wird mit einem am Rechner hinterlegten Zustandswert für die Aufnahmekapazität von Lagerbehältern 2 im Bereitstellungsbereich 44 und/oder Durchlaufkanal 45 verglichen. Der Bereitstellungsbereich 44 kann beispielsweise einen oder zwei Lagerbehälter 2 hintereinander aufnehmen. Der Durchlaufkanal 45 kann im Bereitstellungsbereich 44 beispielsweise einen oder zwei Lagerbehälter 2 und im Übergabebereich 46 ebenfalls beispielsweise einen oder zwei Lagerbehälter 2 hintereinander aufnehmen. Der Rechner wertet den Vergleich aus.

Sind sämtliche Bereitstellungsbereiche 44 und/oder Bereitstellungs- und Übergabebereiche 44, 46 belegt, oder zu wenige Bereitstellungsbereiche 44 und/oder Bereitstellungs- und Übergabebereiche 44, 46 unbelegt, als zur Bereitstellung von unterschiedlichen Artikeln für einen Kommissionierauftrag in mehreren Bereitstellungsbereichen 44 benötigt werden, wird die erste Fördertechnik 7, insbesondere das Förderfahrzeug 10 derart gesteuert, dass der Lagerbehälter 2 entlang des zweiten Förderweges 80 in den zweiten Kommissionierbereich 6 gefördert und an einem oder mehreren der Bereitstellplätze 73 bereitgestellt wird.

Werden beispielsweise für einen Kommissionierauftrag 20 Stk. Liedertexthefte und 10 Stk. Gitarrenseiten benötigt, wobei die Liedertexthefte in fünf ersten Lagerbehälter 2 und die Gitarrenseiten in einem einzigen zweiten Lagerbehälter 2 enthalten sein können, und ist nur noch ein Bereitstellungsbereich 44 unbelegt, in welchem der zweite Lagerbehälter 2 bereitgestellt werde könnte, werden die Lagerbehälter 2 zu diesem Kommissionierauftrag in den zweiten Kommissionierbereich 6 gefördert und in einem Bereitstellungsbereich 73 auf mehreren Bereitstellplätzen bereitgestellt.

Darüber hinaus soll das erfindungsgemäße Verfahren die vorrangige Behandlung eines Kommissionierauftrages ermöglichen, daher so genannte Eilaufträge abgearbeitet werden können. Ist ein Lagerbehälter 2, welcher den angeforderten Artikel enthält, bereits in einem der Bereitstellungsbereiche 44, 73 bereitgestellt worden, kann dieser unmittelbar in einen Auftragsbehälter 3 abgelegt werden. Befindet sich jedoch ein Lagerbehälter 2, welcher den angeforderten Artikel enthält, noch in einem Lagerregal 35, muss der Lagerbehälter 2 vorerst ausgelagert und zu so einem Kommissionierbereich 5, 6 gefördert werden, welcher an einem der Kommissionier-Arbeitsplätze 29, 41 noch zumindest einen unbelegten Bereitstellungsbereich 44, 73 hat.

Ein drittes Zuweisungskriterium ist zumindest ein Leistungsparameter an der automatisierten zweiten Fördertechnik 8 für Auftragsbehälter 3. Der Leistungsparameter ist beispielsweise durch die Auslastung der Förderbahn 22, wie der Durchsatz oder die Durchlaufzeit der Auftragsbehälter 3 auf der Förderbahn 22 definiert. Die Förderbahn 22 ist vorzugsweise durch einen Stauförderer gebildet. Zur Erfassung des Durchsatzes, der Durchlaufzeit werden beispielsweise Sensoren verwendet und/oder wird die Auslastung vom Rechner über das Ein- und Ausschaltverhalten oder die Stromaufnahme der Antriebsmotoren für die Förderbahn 22 berechnet. Die Auslastung kann aber auch unmittelbar vom Rechner ermittelt werden, nachdem dieser auch die Funktion eines Materialflussrechners realisiert.

Der Istwert für den Leistungsparameter wird mit einem Grenzwert für den Leistungsparameter in einem Vergleichsmodul des Rechners verglichen. Unterschreitet der Istwert den Grenzwert, bedeutet dies, dass in einem Förderabschnitt der automatisierten Fördertechnik 8, insbesondere an der Förderbahn 22 die maximale Auslastung erreicht ist, daher der Durchsatz auf ein Minimum abgefallen ist. In diesem Fall wird die erste Fördertechnik 7, insbesondere das Förderfahrzeug 10 derart gesteuert, dass der Lagerbehälter 2 entlang des zweiten Förderweges 80 in den zweiten Kommissionierbereich 6 gefördert und im Bereitstellungsbereich 73 bereitgestellt wird.

Dieser Fall kann eintreten, wenn von der Kommissionierperson 42 die "anstehenden" Kommissionieraufträge am Kommissionier-Arbeitsplatz 41 nicht in der geplanten Kommissionierzeit abgearbeitet wurden und die Auftragsbehälter über weite Teile der Förderbahn 22 aufgestaut sind.

Ein viertes Zuweisungskriterium ist die Anzahl an Auftragspositionen zu einem Kommissionierauftrag, daher eine Bestellmenge. Die Anzahl an Auftragspositionen (Ist-Bestellmenge) ist dem Rechner nach Erfassung des Kommissionierauftrages bekannt. Beispielsweise werden für einen Kommissionierauftrag 20 Stk. Stimmgeräte und 5 Gitarrenseiten benötigt. Ferner kann der Rechner die Bestandsmenge in einem jeden Lagerbehälter 2 in seiner Funktionalität als Materialflussrechner einfach ermitteln, da jeder Lagerbehälter 2 nur einen Artikeltyp enthält. Entspricht die Bestellmenge für einen Artikeltyp zu einem Kommissionierauftrag, beispielsweise 20 Stk. Stimmgeräte, der Bestandsmenge in einem Lagerbehälter 2 für diesen Artikeltyp, wird die erste Fördertechnik 7, insbesondere das Förderfahrzeug 10 derart gesteuert, dass der Lagerbehälter 2 aus dem Behälterlager 4 ausgelagert und entlang des zweiten Förderweges 80 (Fig. 1) in den zweiten Kommissionierbereich 6 gefördert und in einem der Bereitstellungsbereiche 73 bereitgestellt wird. Der Rechner definiert den Lagerbehälter 2 nunmehr als Auftragsbehälter 3, in welchen Artikel eines anderen Artikeltyps in entsprechender Anzahl, beispielsweise 5 Gitarrenseiten, abgelegt werden. Zum Kommissionieren wird der Lagerbehälter 2 vorerst vom Bereitstellungsbereich 73 in den Puffer 75 bewegt. Dem genannten Lagerbehälter 2 können in einem vorangegangenen Kommissioniervorgang an einem Kommissionier-Arbeitsplatz 29, 41 bereits Artikel entnommen worden sein, sodass dieser nur noch eine Teilmenge aus der ursprünglichen Bestandsmenge, beispielsweise 40 Stk. Stimmgeräte enthält.

Nach einer anderen Ausführung ist es auch möglich, dass in der Auftragsvorausschau, insbesondere vor der Inbetriebsetzung der Anlage 1 vom Rechner in seiner Funktion als Materialflussrechner die Position zu jedem der in der Anlage 1 verteilten Lagerbehälter 2 ermittelt wird. Dem Rechner ist bekannt, welche Lagerbehälter 2 mit welchen Artikeln sich im Behälterlager 4, daher in den Bereitstellungsbereichen 44 an den Kommissionier-Arbeitsplätzen 41 und den Lagerregalen 35, und in den Bereitstellungsbereichen 73 an den Kommissionier-Arbeitsplätzen 29 sowie auf der ersten Fördertechnik 7 befinden. Aus den erfassten Kommissionieraufträgen sind dem Rechner die Auftragspositionen je Artikel bekannt. Der Rechner vergleicht die Bestandsmenge zu jedem Artikel und die Anzahl an Auftragspositionen, die zur Abwicklung der Kommissionieraufträge benötigt werden, daher eine Bestellmenge zu jedem Artikel. Sind nun die gemäß der Auftragsvorausschau benötigten Artikel im ersten Kommissionierbereich 5 an den Bereitstellungsbereichen 44 eines einzigen oder mehrerer Kommissionier-Arbeitsplätze 41 vorhanden, ist eine Bereitstellung an den Bereitstellungsbereichen 44 nicht erforderlich. Daher können alle Kommissionieraufträge an einem einzigen oder mehreren Kommissionier-Arbeitsplätzen 41 abgearbeitet werden. Überschreitet jedoch die Anzahl an Auftragspositionen (Bestellmenge) zu einem Artikeltyp die Bestandsmenge dieses Artikeltyps oder wird ein Artikel eines anderen Artikeltyps, welcher nicht an einem Bereitstellungsbereich 44 bereitgestellt ist (Bestandsmenge beträgt Null), so wird die erste Fördertechnik 7, insbesondere das Förderfahrzeug 10 derart gesteuert, dass ein Lagerbehälter 2 mit dem gewünschten Artikeltyp aus dem Behälterlager 4 ausgelagert und entlang des zweiten Förderweges 80 (Fig. 1) in den zweiten Kommissionierbereich 6 gefördert und in einem der Bereitstellungsbereiche 73 bereitgestellt wird.

Wie in Fig. 10 in strichlierte Linien abgebildet, ist es möglich, dass in der Dispositionsprüfung mehrere Zuweisungskriterien berücksichtigt werden können und Lagerbehälter 2 nur dann von der ersten Fördertechnik 7, insbesondere dem Förderfahrzeug 10 entlang des ersten Förderweges 65 in den ersten Kommissionierbereich 5 gefördert und im Bereitstellungsbereich 44 bereitgestellt werden, wenn alle Zuweisungskriterien erfüllt sind.

Nach einer Ausführung der Erfindung ist es auch möglich, dass bei der Dispositionsprüfung vom Rechner zusätzlich eine Dispositionsanalyse für die Zuweisung der Lagerbehälter 2 auf einen der Bereitstellungsbereiche 44 innerhalb des ersten Kommissionierbereiches 5 durchgeführt wird, vorausgesetzt es sind einige Bereitstellungsbereiche 44 unbelegt. Die Dispositionsanalyse wird in einem Unterprogramm (Programmmodul) des Computerprogramms ausgeführt, welches auf dem Rechner läuft bzw. gespeichert ist.

Mit dieser Maßnahme kann zusätzlich auf Basis von zumindest einem Optimierungskriterium eine Optimierung in der Verteilung der Lagerbehälter 2 auf unbelegte Bereitstellungsbereiche 44 und eine Verkürzung der Laufstrecke für die Kommissionierperson 42 erreicht werden.

Außerdem ist es nicht zwingend erforderlich, dass die Auftragsbehälter 3, welche über die zweite Fördertechnik 8 zu einem Kommissionier-Arbeitsplatz 41 angefördert und in einer Halteposition zum Kommissionieren bereitgestellt werden, in der Reihenfolge ihrer Anlieferung auf einem einzigen Halteplatz abgearbeitet werden. Es können auch eine Vielzahl von Auftragsbehälter 3 auf der zweiten Fördertechnik 8 gleichzeitig bereitgestellt und abgearbeitet werden. Unter Verwendung beispielsweise einer optischen Vorrichtung, wie einer so genannten "Put-to-Light"-Lichtquelle, insbesondere einem Laser, ist es möglich, der Kommissionierperson 42 anzuzeigen, in welchen der Auftragsbehälter 3 die Artikel abgelegt werden sollen.

Vor diesem Hintergrund, wird nun in der Dispositionsanalyse anhand eines ersten Optimierungskriterium die Bereitstellung eines Lagerbehälters 2 und eines Auftragsbehälters 3 derart aufeinander abgestimmt, dass die Wegstrecke zwischen dem Lagerbehälter 2 und dem Auftragsbehälter 3 optimiert ist, wenn sich der Lagerbehälter 2 an der Bereitstellposition und der Auftragsbehälter 3 an der Halteposition befinden. Die erste Fördertechnik 7, insbesondere das Förderfahrzeug 10 wird abhängig von der Dispositionsanalyse derart gesteuert, dass der Lagerbehälter 2 innerhalb des ersten Kommissionierbereiches 5 koordiniert auf einen von mehreren unbelegten Bereitstellungsbereichen 44 gefördert wird. Dementsprechend wird vom Rechner auch die Berechnung des ersten Förderweges 65 vorgenommen.

Andererseits ist es auch von Vorteil, dass in der Dispositionsanalyse vom Rechner anhand eines zweiten Optimierungskriterium zu einem zuvor erfassten Kommissionierauftrag eine Kommissionierzone 81 (Fig. 3) an einem Kommissionier-Arbeitsplatz 41 ermittelt wird, innerhalb welcher an zumindest zwei unmittelbar benachbarten Bereitstellungsbereichen 44 Lagerbehälter 2 der Kommissionierperson 42 angeboten werden. Umfasst der Kommissionierauftrag unterschiedliche Artikel, wird ein Lagerbehälter 2 mit einem ersten Artikeltyp in einem ersten Bereitstellungsbereich 44 und ein Lagerbehälter 2 mit einem zweiten Artikeltyp in einem zweiten Bereitstellungsbereich 44 bereitgestellt. Somit werden am Kommissionier-Arbeitsplatz 41 innerhalb der Kommissionierzone 81 unterschiedliche Artikel in mehreren Bereitstellungsbereichen 44 gefördert.

Der Kommissionierauftrag kann andererseits auch Artikel nur eines einzigen Artikeltyps umfassen. In diesem Fall, werden die Lagerbehälter 2 mit Artikel eines einzigen Artikeltyps am Kommissionier-Arbeitsplatz 41 der Kommissionierperson 42 an mehreren unmittelbar benachbarten Bereitstellungsbereichen 44 angeboten. Somit werden am Kommissionier-Arbeitsplatz 41 innerhalb der Kommissionierzone 81 gleiche Artikel in mehreren Bereitstellungsbereichen 44 gefördert.

Wurden zu den Kommissionieraufträgen die Lagerbehälter 2 nach obigen Verfahrensmaßnahmen in den ersten Kommissionierbereich 5 und in den zweiten Kommissionierbereich 6 gefördert, können in einem anschließenden Verfahrensschritt Kommissionieraufträge parallel abgearbeitet werden.

Die Kommissioniervorgänge werden von den Kommissionierpersonen 42, 70 durchgeführt. Dabei wird zu einem Kommissionierauftrag aus einem oder mehreren Lagerbehältern 2 jeweils zumindest ein Artikel entnommen und in zumindest einem Auftragsbehälter 3 abgelegt. Die Kommissionierperson 42, 70 bestätigt die Beendigung des Kommissioniervorganges an der Ein- und/oder Ausgabevorrichtung 49, 79. Anschließend wird in einem letzten Verfahrensschritt der Auftragsbehälter 3 von der Förderbahn 22 in das Verteilsystem 21 oder von der Förderbahn 26 in das Verteilsystem 21 eingeschleust und entweder zum Warenausgang oder vom zweiten Kommissionierbereich 6 in den ersten Kommissionierbereich 5 abtransportiert.

Die Auftragsbehälter 3 werden über die zweite Fördertechnik 8 zu den Kommissionier-Arbeitsplätzen 29, 41 im jeweiligen Kommissionierbereich 5, 6 (KOM-Bereich) angefördert. Nachdem aus der Dispositionsprüfung dem Rechner bekannt ist, ob die Lagerbehälter 2 entweder im Bereitstellungsbereich 44 oder im Bereitstellungsbereich 73 bereitgestellt werden, kann der Rechner auch die zweite Fördertechnik 8 derart steuern, dass ein Auftragsbehälter 3 in denjenigen Kommissionierbereich 5, 6 gefördert wird, in welchem der Lagerbehälter 2 bereitgestellt werden soll.

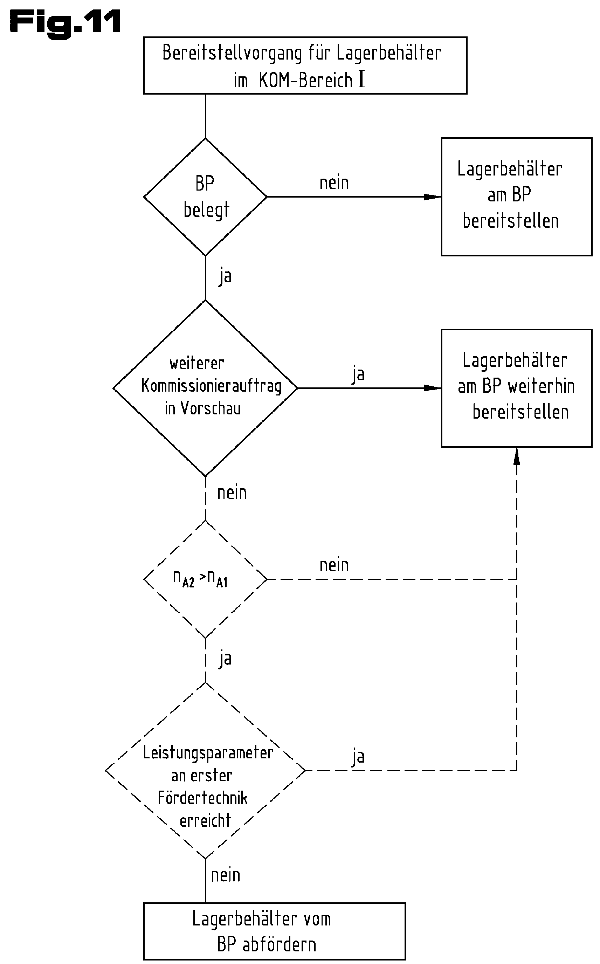

In Fig. 11 ist eine modifizierte Ausführung der Bereitstellung von Artikeln in Lagerbehältern 2 an einem Kommissionier-Arbeitsplatz 41 gezeigt. Insbesondere soll gegenüber dem aus der EP 0 847 939 A1 bekannten Kommissionierverfahren, bei dem nach Entnahme von Artikeln zu einem einzigen Kommissionierauftrag der Lagerbehälter wieder in das Behälterlager eingelagert wird, der Manipulationsaufwand für die Kommissionierperson verringert werden. Auch kann die Anzahl der Bereitstellungsvorgänge reduziert und dennoch eine hohe Kommissioniereffizienz erreicht werden. Außerdem kann die erste Fördertechnik 7, insbesondere das Regalförderfahrzeug 10 unterhalb der maximalen Leistungsgrenze betrieben werden, was sich positiv auf den Wartungsaufwand und die Standzeit der Kommissionieranlage auswirkt.

Vor diesem Hintergrund erfolgt die Rücklagerung von noch teilweise befüllten Lagerbehältern 2 aus den Bereitstellungsbereichen 44 zurück in das Behälterlager 4 auf Basis zumindest eines Rücklagerkriteriums. Diese Ausführung ist zwar mit Vorteil an der beschriebenen Anlage 1 einsetzbar, wäre grundsätzlich aber auch denkbar, dass die Anlage zum Kommissionieren von Artikeln ausschließlich zumindest einen im Behälterlager 4 integrierten Kommissionier-Arbeitsplatz 41, eine erste Fördertechnik 7 zum Transport von Lagerbehältern 2 und zweite Fördertechnik 8 zum Transport von Auftragsbehältern 3 umfasst, wobei die Lagerbehälter 2 mittels der ersten Fördertechnik 7 zum Kommissionier-Arbeitsplatz 41 gefördert und an diesem von einer Kommissionierperson 42 zu einem Kommissionierauftrag zumindest ein Artikel aus dem Lagerbehälter 2 entnommen und in einem Auftragsbehälter 3 abgelegt wird. Die Lagerbehälter 2 können in oben beschriebener Weise gemäß der Dispositionsanalyse auf die Bereitstellungsbereiche 44 verteilt werden.

Wie oben beschrieben, werden vorerst im Lagerverwaltungssystem Kommissionieraufträge erfasst. Danach können vom Rechner in der Auftragsvorausschau die Kommissionieraufträge, Auftragspositionen zu jedem Artikel ermittelt und zumindest eines der nachfolgenden Rücklagerkriterien vom Rechner von einer Programmlogik, insbesondere einem Computerprogramm geprüft werden.

Ein erstes Rücklagerkriterium ist durch die erfassten Kommissionieraufträge zu einem Artikel definiert. So kann der Fall eintreten, dass gemäß der Auftragsvorausschau über eine Anzahl von Kommissionieraufträgen bzw. innerhalb eines Zeitfensters, beispielsweise zwischen 0,5 Stunden und 4 Stunden, zu unterschiedlichen Kommissionieraufträgen derselbe Artikel mehrmals benötigt wird. Ist nun dieser Artikel bereits in einem vorangegangenen Bereitstellungsvorgang in einem der Bereitstellungsbereiche 44 bereitgestellt und auch schon ein erster Kommissionierauftrag abgearbeitet worden, wird der Lagerbehälter 2 nicht in das Behälterlager 4 rückgelagert ehe auch ein zweiter Kommissionierauftrag abgearbeitet worden ist. Mit anderen Worten verharrt der Lagerbehälter 2 solange an einem Bereitstellungsbereich 44, insbesondere einem Bereitstellungsplatz 44a (BP) bis sämtliche Kommissionieraufträge zu einem Artikel gemäß der Auftragsvorausschau über eine Anzahl von Kommissionieraufträgen bzw. innerhalb eines Zeitfensters abgearbeitet wurden.

Ein zweites Rücklagerkriterium ist die Anzahl der Auftragspositionen "n" (Umschlaghäufigkeit) zu unterschiedlichen Artikeln, welche vom Rechner nach Erfassung eines Kommissionierauftrages zu jedem Artikel ermittelt wird. So kann der Fall eintreten, dass gemäß der Auftragsvorausschau über eine Anzahl von Kommissionieraufträgen bzw. innerhalb eines Zeitfensters, beispielsweise zwischen 0,5 Stunden und 4 Stunden, zu mehreren Kommissionieraufträgen Artikel in unterschiedlich hoher Anzahl benötigt werden. Beispielsweise werden für einen ersten Kommissionierauftrag 10 Stk. Liedertexthefte und für einen zweiten Kommissionierauftrag 20 Stk. Gitarrenseiten benötigt. Dabei wird der am Rechner erfasste Istwert für die Anzahl an Auftragspositionen eines Artikels vom ersten Artikeltyp mit einem am Rechner erfassten Istwert für die Anzahl an Auftragspositionen eines Artikels vom zweiten Artikeltyp verglichen. Werden zur Abarbeitung eines Kommissionierauftrages Artikel vom zweiten Artikeltyp häufiger benötigt als Artikel vom ersten Artikeltyp, welche bereits an einem der Bereitstellungsbereiche 44 angeboten werden, wird der Lagerbehälter 2 mit den Artikeln vom ersten Artikeltyp zurück in das Behälterlager 4 eingelagert. Danach wird ein Lagerbehälter 2 mit den Artikeln vom zweiten Artikeltyp in demjenigen Bereitstellungsbereich 44, insbesondere einem Bereitstellungsplatz 44a (BP) angeboten, in welchem zuvor der Lagerbehälter 2 mit den Artikeln vom ersten Artikeltyp bereitgestellt wurde.

Ein drittes Rücklagerkriterium ist zumindest ein Leistungsparameter an der automatisierten ersten Fördertechnik 7 für Lagerbehälter 2. Der Leistungsparameter ist beispielsweise durch die maximale Auslastung (Leistungsgrenze) der ersten Fördertechnik 7 in einem ihrer Förderabschnitte, wie des Regalförderfahrzeuges 10 oder der Durchsatz von Lagerbehältern 3 an der Förderumlaufbahn 11 definiert. Zur Erfassung des Durchsatzes werden beispielsweise Sensoren verwendet und/oder wird die Auslastung vom Rechner über das Ein- und Ausschaltverhalten oder die Stromaufnahme des Antriebsmotors für das Regalförderfahrzeug 10 oder Antriebsmotors für die Förderumlaufbahn 11 berechnet. Die Auslastung der ersten Fördertechnik 7 kann aber auch unmittelbar vom Rechner ermittelt werden, nachdem dieser auch die Funktion eines Materialflussrechners realisiert.

Der Istwert für den Leistungsparameter wird mit einem Grenzwert für den Leistungsparameter in einem Vergleichsmodul des Rechners verglichen. Wird beispielsweise ein Grenzwert für die Antriebsleistung des Regalförderfahrzeuges 10 erreicht, ist eine Rücklagerung eines Lagerbehälters 2 vorläufig nicht möglich und verbleibt dieser Lagerbehälter 2 bis auf weiters im Bereitstellungsbereich 44, insbesondere einem Bereitstellungsplatz 44a (BP).

Ein viertes Rücklagerkriterium ist durch die Absatzmenge an unterschiedlichen Artikeln definiert. Hierzu wird vorerst in einer Absatzmengenanalyse, welche vom Rechner durchgeführt wird, über einen Beobachtungszeitraum (Auftragsrückschau) von beispielsweise n-Tage die Absatzmenge zu jedem Artikel ermittelt. Die Absatzmenge kann vom Rechner über die Anzahl an Auftragspositionen eines Artikels oder die erfassten Kommissionieraufträge berechnet werden. Dadurch kann eine Prognose der Absatzmenge zu Artikeln erstellt werden, anhand deren auch die Bereitstellung von Lagerbehältern 2 an den Bereitstellungsbereichen 44 gesteuert werden kann. Die Absatzmenge eines Artikels wird mit einem am Rechner hinterlegten Grenzwert für die Absatzmenge eines Artikels verglichen. Liegt die Absatzmenge eines Artikels oberhalb des Grenzwertes, erweist es sich von Vorteil, wenn dieser Artikel aufgrund der Prognose in einem Lagerbehälter 2 an einem der Bereitstellungsbereiche 44 bereitgestellt wird. Der Lagerbehälter 2 wird entweder zu einem noch unbelegten Bereitstellungsbereich 44, insbesondere zu einem noch unbelegten Bereitstellungsplatz 44a (BP) oder zu einem Bereitstellungsplatz 44a (BP) gefördert, an welchem vorerst noch ein teilweise befüllter Lagerbehälter 2 aus einem vorangegangenen Bereitstellungsvorgang in das Behälterlager 4 rückgelagert werden muss. Rückgelagert wird aber nur ein solcher Lagerbehälter 2, welcher Artikel enthält, die gemäß der Auftragsvorausschau, wie oben beschrieben, nicht mehr benötigt werden.

Eine solche Rücklagerung wird nicht laufend während des Kommissionierbetriebes durchgeführt, sondern zu Randzeiten des Betriebes, beispielweise zur Lagerbereinigung zu Schichtbeginn.

Ein fünftes Rücklagerkriterium ist durch eine Kostenanalyse definiert. Dabei werden die Kosten für den Transport eines Lagerbehälters 2 zwischen einem Lagerkanal 36 und einem Kommissionier-Arbeitsplatz 29 zu den Kosten für die Lagerung eines Lagerbehälters 2 in einem Bereitstellungsbereich 44 gegenübergestellt. Wird vom Rechner in der Kostenanalyse festgestellt, dass die Kosten für den Transport eines Lagerbehälters 2 zu einem der Kommissionier-Arbeitsplätze 29 kostengünstiger ist als die Lagerkosten eines Lagerbehälters im Bereitstellungsbereich 44, wird der Lagerbehälter 2 vom Bereitstellungsbereich 44, insbesondere dem Bereitstellungsplatz 44a (BP), abgefördert und durch die erste Fördertechnik 7 in das Behälterlager 4 rückgelagert oder unmittelbar zu einem der Kommissionier-Arbeitsplätze 29 gefördert.

Darüber hinaus können Lagerbehälter 2 zumindest an einigen der Bereitstellungsbereiche 44 auch vor Beginn des Kommissionierbetriebes rückgelagert werden, wenn an diesen Bereitstellungsbereichen 44 Lagerbehälter 2 bereitgestellt werden, welche Artikel enthalten, die gemäß der Absatzprognose und/oder Auftragsvorausschau nicht benötigt werden. Auch eine solche Rücklagerung wird zu Randzeiten des Betriebes, beispielweise zu Schichtbeginn durchgeführt. Werden nun gemäß der Absatzprognose bestimmte Artikel sehr häufig angefordert, können zu den nunmehr unbelegten Bereitstellungsbereichen 44 Lagerbehälter 2 angefördert werden, welche die gemäß der Absatzprognose häufig benötigten Artikel enthalten. Dadurch kann der Bereitstellungsvorgang von Lagerbehältern 2 optimiert und die Inbetriebnahme für die Kommissionierung an einem Kommissionier-Arbeitsplatz 41 beschleunigt werden.

Wie in Fig. 11 in strichlierte Linien abgebildet, ist es möglich, dass für die Rücklagerung von Lagerbehältern 2 mehrere der oben beschriebenen Rücklagerkriterien berücksichtigt werden und Lagerbehälter 2 nur dann von Bereitstellungsbereichen 44, insbesondere Bereitstellungsplätzen 44a (BP) abgefördert werden, wenn alle Rücklagerkriterien erfüllt sind.

Es sei auch noch an dieser Stelle hingewiesen, dass beim Rücklagervorgang entweder nur ein einziger Lagerbehälter 2 von einem Bereitstellungsbereich 44 abgefördert und auf das Förderfahrzeug 10 übernommen oder gleichzeitig mehrere Lagerbehälter 2, beispielweise zwei Lagerbehälter 2 von einem Bereitstellungsbereich 44 abgefördert und auf das Förderfahrzeug 10 übernommen werden können. Werden gleichzeitig mehrere Lagerbehälter 2 von einem Durchlaufkanal 45 abgefördert, kann wieder sehr rasch ein Bereitstellungsbereich 44 für zumindest einen Lagerbehälter 2 zur Verfügung gestellt und ein weiterer Kommissionierauftrag abgearbeitet werden.

Soll zumindest ein teilweise befüllter Lagerbehälter 2 in das Behälterlager 4 rückgelagert werden, wird dieser vorerst manuell durch die Kommissionierperson 70 in den Übergabebereich 46 bewegt. Das Rücklagern eines Lagerbehälters 2 wird der Kommissionierperson 70 an der Ein- und/oder Ausgabevorrichtung 49 beispielsweise optisch signalisiert. Wurde der Lagerbehälter 2 in den Übergabebereich 46 geschoben und quittiert die Kommissionierperson 70 den Rücklagervorgang, kann das Förderfahrzeug 10 den Lagerbehälter 2 vom Übergabebereich 46 abholen und in das Behälterlager 4 einlagern.

Auch sei noch darauf hingewiesen, dass ein Lagerbehälter 2 vom Bereitstellungsbereich 44, 73 durch die Kommissionierperson 42, 70 entfernt wird, sofern beim Kommissioniervorgang sämtliche Artikel aus einem Lagerbehälter 2 entnommen wurden. Nach dem Entfernen des leeren Lagerbehälters 2 wird automatisch ein Lagerbehälter 2 mit Artikeln in den Bereitstellungsbereich 44, 73 nachtransportiert.

Soweit vorstehend von "Behältern" die Rede ist, so soll dies nicht einschränkend verstanden werden. Vielmehr umfasst die vorliegende Erfindung auch solche Systeme, in denen andere Ladehilfsmittel, wie Tablare oder Paletten verwendet werden, um Artikel zu lagern und zu transportieren.

Die Ausführungsbeispiele zeigen mögliche Ausführungsvarianten des Verfahrens und der Anlage zum Kommissionieren von Artikeln aus Lagerbehältern in Auftragsbehälter, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst. Der Ordnung halber sei abschließend darauf hingewiesen, dass zum besseren Verständnis des Aufbaus der Anlage zum Kommissionieren diese bzw. deren Bestandteile teilweise unmaßstäblich und/oder vergrößert und/oder verkleinert dargestellt wurden.

Vor allem können die einzelnen in den Fig. 1 bis 11 gezeigten Ausführungen den Gegenstand von eigenständigen Lösungen bilden. Die diesbezüglichen, erfindungsgemäßen Aufgaben und Lösungen sind den Detailbeschreibungen dieser Figuren zu entnehmen.

**Bezugszeichenaufstellung**

| | | | |
|---|---|---|---|
| 1 | Anlage | 45 | Durchlaufkanal |
| 2 | Lagerbehälter | 46 | Übergabebereich |
| 3 | Auftragsbehälter | 47 | Transportvorrichtung |
| 4 | Behälterlager | 49 | Ein- und/oder Ausgabevorrichtung |
| 5 | Kommissionierbereich | 50 | Regalfront |
| | | | |
| 6 | Kommissionierbereich | 51 | Sperranschlag |
| 7 | Fördertechnik | 52 | Rahmen |
| 8 | Fördertechnik | 53 | Betätigungsvorrichtung |
| 9 | Verteilsystem | 54 | Betätigungshebel |
| 10 | Förderfahrzeug | 55 | Schwenkachse |
| | | | |
| 11 | Förderumlaufbahn | 56 | Massekörper |
| 12 | Förderumlaufbahn | 57 | Führungskulisse |
| 13 | Übergabeplatz | 58 | Schwenkachse |
| 14 | Ausschleusbahn | 59 | Gestänge |
| 15 | Einschleusbahn | 60 | Anschlagfläche |
| | | | |
| 16 | Ausschleusbereich | 61 | Anschlag |
| 17 | Bereitstellungsbahn | 62 | Pfeil |
| 18 | Einschleusbereich | 63 | Hinterkante |
| 19 | Förderbahn | 64 | Vorderkante |
| 20 | Förderbahn | 65 | Förderweg |
| | | | |
| 21 | Verteilsystem | 66 | Boden |
| 22 | Förderbahn | 67 | Pfeil |
| 23 | Förderumlaufbahn | 70 | Kommissionierperson |
| 24 | Förderumlaufbahn | | |
| 25 | Einschleusbereich | 71 | Fördertechnik |
| | | 72 | Leerbehälter |
| 26 | Förderbahn | 73 | Bereitstellungsbereich |
| 27 | Förderbahn | 74 | Arbeitsbereich |
| 28 | Förderbahn | 75 | Puffer |
| 29 | Kommissionier-Arbeitsplatz | | |
| | | 76 | Förderbahn |
| 34 | Regalblock | 77 | Förderrichtung |
| 35 | Lagerregal | 78 | Förderrichtung |
| | | 79 | Ein- und/oder Ausgabevorrichtung |
| 36 | Lagerkanal | 80 | Förderweg |
| 37 | Gasse | | |
| 38 | Plattform | 81 | Kommissionierzone |
| 39 | Lastaufnahmevorrichtung | | |
| 40 | Kommissioniergang | | |
| | | | |
| 41 | Kommissionier-Arbeitsplatz | | |
| 42 | Kommissionierperson | | |
| 43 | Tribüne | | |
| 44 | Bereitstellungsbereich | | |

## Patentansprüche

1. Verfahren zum Kommissionieren von Artikeln unterschiedlicher Umschlaghäufigkeit aus Lagerbehältern (2) in Auftragsbehälter (3), bei dem die Lagerbehälter (2) durch eine automatisierte erste Fördertechnik (7) von einem Behälterlager (4) zu Kommissionier-Arbeitsplätzen (29, 41) in unterschiedlichen Kommissionierbereichen (5, 6) gefördert und an welchen jeweils von einer Kommissionierperson (42, 70) zu einem Kommissionierauftrag ein Artikel aus zumindest einem Lagerbehälter (2) entnommen und in einem durch eine zweite Fördertechnik (8) bereitgestellten Auftragsbehälter (3) abgelegt wird, **dadurch gekennzeichnet, dass** von einem Lagerverwaltungssystem (Rechner) in einer Auftragsvorausschau über eine Anzahl von Kommissionieraufträgen die Auftragspositionen zu je einem Artikel ermittelt und in einer Dispositionsprüfung für die Artikel die Lagerbehälter (2), welche die Artikel sortenrein enthalten, entweder einem im Behälterlager (4) integriert angeordneten Kommissionier-Arbeitsplatz (41) im ersten Kommissionierbereich (5) oder einem vom Behälterlager (4) getrennt angeordneten Kommissionier-Arbeitsplatz (29) im zweiten Kommissionierbereich (6) zugewiesen werden und dass die Lagerbehälter (2) auf unterschiedlichen, automatisierten Förderwegen (65, 80) der ersten Fördertechnik (7) entweder zu Bereitstellungsbereichen (44) für die Lagerbehälter (2) am ersten Kommissionier-Arbeitsplatz (41) im ersten Kommissionierbereich (5) oder zu einem Bereitstellungsbereich (73) für die Lagerbehälter (2) am zweiten Kommissionier-Arbeitsplatz (29) im zweiten Kommissionierbereich (6) transportiert werden.

2. Verfahren nach Anspruch 1, **dadurch gekennzeichnet, dass** bei der Dispositionsprüfung vom Lagerverwaltungssystem eine Anzahl an Auftragspositionen ermittelt und mit einem Grenzwert für Auftragspositionen eines Artikels verglichen wird.

3. Verfahren nach Anspruch 1 oder 2, **dadurch gekennzeichnet, dass** bei der Dispositionsprüfung vom Lagerverwaltungssystem zumindest ein Leistungsparameter an der zweiten Fördertechnik (8) für die Auftragsbehälter (3), wie die Auslastung der Fördertechnik (8) in ihrem entlang des Kommissionier-Arbeitsplatzes (41) verlaufenden Förderabschnittes (22), ermittelt und mit einem Grenzwert für den Leistungsparameter verglichen wird.

4. Verfahren nach einem der Ansprüche 1 bis 3, **dadurch gekennzeichnet, dass** bei der Dispositionsprüfung vom Lagerverwaltungssystem am Kommissionier-Arbeitsplatz (41) im ersten Kommissionierbereich (5) ein Füllgrad an einem jeden Bereitstellungsbereich (44) ermittelt wird.

5. Verfahren nach einem der Ansprüche 1 bis 4, **dadurch gekennzeichnet, dass** bei der Dispositionsprüfung vom Lagerverwaltungssystem eine Bestandsmenge an Artikel in jedem Lagerbehälter (2) ermittelt und mit einer Bestellmenge zu einem Kommissionierauftrag verglichen wird.

6. Verfahren nach einem der Ansprüche 1 bis 5, **dadurch gekennzeichnet, dass** bei der Dispositionsprüfung vom Lagerverwaltungssystem eine Bestandsmenge an Artikel in jedem Lagerbehälter (2) ermittelt und mit einer Bestellmenge für zur Abarbeitung der Kommissionieraufträge gemäß der Auftragsvorausschau benötigte Artikel verglichen und ein Lagerbehälter (2), welcher Artikel eines angeforderten Artikeltyps enthält, aus dem Behälterlager (4) ausgelagert und im zweiten Kommissionierbereich (6) bereitgestellt wird, wenn im ersten Kommissionierbereich (5) dieser angeforderte Artikeltyp nicht bereitgestellt werden kann.

7. Verfahren nach einem der Ansprüche 1 bis 6, **dadurch gekennzeichnet, dass** der Kommissionier-Arbeitsplatz (41) im ersten Kommissionierbereich (5) Durchlaufkanäle (45) aufweist, welche jeweils einen Bereitstellungsbereich (44) ausbilden, wobei im Bereitstellungsbereich (44) auf einem Bereitstellungsplatz (44a) zumindest ein Lagerbehälter (2) zur Entnahme eines Artikels aus dem Lagerbehälter (2) angedient werden kann.

8. Verfahren nach einem der Ansprüche 1 bis 6, **dadurch gekennzeichnet, dass** der Kommissionier-Arbeitsplatz (41) im ersten Kommissionierbereich (5) Durchlaufkanäle (45) aufweist, welche jeweils einen Bereitstellungsbereich (44) und einen Übergabebereich (46) sowie eine Förderbahn, insbesondere Transportvorrichtung (47), wie eine Rollenbahn, ausbilden, wobei ein Lagerbehälter (2) entlang der Förderbahn zwischen dem Bereitstellungsbereich (44) und einem Übergabebereich (46) bewegt werden kann und wobei im Bereitstellungsbereich (44) auf einem Bereitstellungsplatz (44a) zumindest ein Lagerbehälter (2) zur Entnahme eines Artikels aus dem Lagerbehälter (2) angedient werden kann.

9. Verfahren nach Anspruch 7, **dadurch gekennzeichnet, dass** nach Entnahme zumindest eines Artikels aus dem Lagerbehälter (2) der noch teilweise gefüllte Lagerbehälter (2) von der ersten Fördertechnik (7) zurück in das Behälterlager (4) eingelagert wird.

10. Verfahren nach Anspruch 7, **dadurch gekennzeichnet, dass** nach Entnahme zumindest eines Artikels aus dem Lagerbehälter (2) der noch teilweise gefüllte Lagerbehälter (2) vorerst vom Bereitstellungsbereich (44) in den Übergabebereich (46) bewegt wird, von welchem der noch teilweise gefüllte Lagerbehälter (2) von der ersten Fördertechnik (7) übernommen und anschließend zurück in das Behälterlager (4) eingelagert wird.

11. Verfahren nach einem der Ansprüche 1 bis 10, **dadurch gekennzeichnet, dass** vom Lagerverwaltungssystem in der Auftragsvorausschau zu je einem Artikel erfasste Kommissionieraufträge ermittelt werden und ein Lagerbehälter (2), welcher in einem vorangegangenen Bereitstellungsvorgang in einen Bereitstellungsbereich (44) des ersten Kommissionierbereiches (5) transportiert wurde und noch teilweise mit Artikel befüllt ist, solange im Bereitstellungsbereich (44) verharrt, bis die gemäß der Auftragsvorausschau erfassten Kommissionieraufträge zum betreffenden Artikel abgearbeitet wurden.

12. Verfahren nach einem der Ansprüche 1 bis 11, **dadurch gekennzeichnet, dass** ein Lagerbehälter (2), welcher in einem vorangegangenen Bereitstellungsvorgang in einen Bereitstellungsbereich (44) des ersten Kommissionierbereiches (5) transportiert wurde und noch teilweise mit Artikel eines ersten Artikeltyps befüllt ist, von einem Bereitstellungsbereich (44) in das Behälterlager (4) rückgelagert wird, wenn in der Auftragsvorausschau vom Lagerverwaltungssystem festgestellt wird, dass der Artikel eines zweiten Artikeltyps häufiger benötigt wird als der Artikel eines ersten Artikeltyps.

13. Verfahren nach einem der Ansprüche 1 bis 12, **dadurch gekennzeichnet, dass** ein Lagerbehälter (2), welcher in einem vorangegangenen Bereitstellungsvorgang in einen Bereitstellungsbereich (44) des ersten Kommissionierbereiches (5) transportiert wurde und noch teilweise mit Artikel befüllt ist, von einem Bereitstellungsbereich (44) in das Behälterlager (4) rückgelagert wird, wenn ein Leistungsparameter an der ersten Fördertechnik (7) für die Lagerbehälter (2) unterhalb eines Grenzwertes für den Leistungsparameter liegt.

14. Verfahren nach einem der Ansprüche 1 bis 13, **dadurch gekennzeichnet, dass** ein Lagerbehälter (2), welcher in einem vorangegangenen Bereitstellungsvorgang in einen Bereitstellungsbereich (44) des ersten Kommissionierbereiches (5) transportiert wurde und noch teilweise mit Artikel befüllt ist, von einem Bereitstellungsbereich (44) in das Behälterlager (4) rückgelagert wird, wenn ein Leistungsparameter an der zweiten Fördertechnik (8) für die Auftragsbehälter (3), beispielsweise die Auslastung der Fördertechnik (8) in ihrem entlang des Kommissionier-Arbeitsplatzes (41) verlaufenden Förderabschnittes (22), unterhalb eines Grenzwertes für den Leistungsparameter liegt.

15. Verfahren nach einem der Ansprüche 1 bis 14, **dadurch gekennzeichnet, dass** für die Artikel, welche dem Kommissionier-Arbeitsplatz (41) im ersten Kommissionierbereich (5) mit einem Lagerbehälter (2) zugeführt werden, vom Lagerverwaltungssystem in der Dispositionsprüfung zusätzlich eine Dispositionsanalyse zur Optimierung in der Verteilung der Lagerbehälter (2) auf unbelegte Bereitstellungsbereiche (44) durchgeführt und der Lagerbehälter (2) zu einem vom Lagerverwaltungssystem ermittelten, unbelegten Bereitstellungsbereich (44) zugeführt wird.

16. Verfahren nach Anspruch 15, **dadurch gekennzeichnet, dass** bei der Dispositionsanalyse eine Halteposition für den Auftragsbehälter (3) auf der zweiten Fördertechnik (8) ermittelt und ein Lagerbehälter (2) derart einem der Bereitstellungsbereiche (44) zugeführt wird, dass der Lagerbehälter (2) nahe der Halteposition angedient wird.

17. Verfahren nach Anspruch 15, **dadurch gekennzeichnet, dass** bei der Dispositionsanalyse eine Kommissionierzone (81) für Lagerbehälter (2), welche Artikel sortenrein enthalten, ermittelt wird und die Lagerbehälter (2) derart einigen der Bereitstellungsbereichen (44) zugeführt werden, dass die Lagerbehälter (2) in der Kommissionierzone (81) gruppiert zu einem Kommissionierauftrag zusammengefasst und über die Bereitstellungsbereiche (44) angedient werden.

18. Verfahren nach Anspruch 1, **dadurch gekennzeichnet, dass** am Kommissionier-Arbeitsplatz (41) im ersten Kommissionierbereich (6) und Kommissionier-Arbeitsplatz (29) im zweiten Kommissionierbereich (6) unterschiedliche Kommissioniertechnologien verwendet werden.

19. Anlage (1) zum Kommissionieren von Artikeln unterschiedlicher Umschlaghäufigkeit aus Lagerbehältern (2) in Auftragsbehälter (3), mit einem Behälterlager (4), Kommissionier-Arbeitsplätzen (29, 41) in unterschiedlichen Kommissionierbereichen (5, 6), einer automatisierten ersten Fördertechnik (7) zum Transport von Lagerbehältern (2) und zweiten Fördertechnik (8) zum Transport von Auftragsbehältern (3), wobei die Lagerbehälter (2) mittels der ersten Fördertechnik (7) zu den Kommissionier-Arbeitsplätzen (29, 41) gefördert und an diesen jeweils von einer Kommissionierperson (42, 70) zu einem Kommissionierauftrag zumindest ein Artikel aus dem Lagerbehälter (2) entnommen und in einem Auftragsbehälter (3) abgelegt wird, insbesondere zur Durchführung des Verfahrens nach einem der Ansprüche 1 bis 18, **dadurch gekennzeichnet, dass** ein Lagerverwaltungssystem eine Programmlogik aufweist, insbesondere ein Computerprogramm läuft, mittels welchem in einer Auftragsvorausschau über eine Anzahl von Kommissionieraufträgen die Auftragspositionen zu je einem Artikel ermittelt und in einer Dispositionsprüfung für die Artikel die Lagerbehälter (2), welche die Artikel sortenrein enthalten, entweder einem ersten Kommissionierbereich (5) oder einem zweiten Kommissionierbereich (6) zugewiesen werden, wobei der erste Kommissionierbereich (5) mit zumindest einem Kommissionier-Arbeitsplatz (41) im Behälterlager (4) integriert und der zweite Kommissionierbereich (6) mit zumindest einem Kommissionier-Arbeitsplatz (29) vom Behälterlager (4) getrennt angeordneten sind, und dass die erste Fördertechnik (7) unterschiedliche, automatisierte Förderwege (65, 80) aufweist, auf denen die Lagerbehälter (2) entweder zu Bereitstellungsbereichen (44) für die Lagerbehälter (2) am Kommissionier-Arbeitsplatz (41) im ersten Kommissionierbereich (5) oder zu einem Bereitstellungsbereich (73) für die Lagerbehälter (2) am Kommissionier-Arbeitsplatz (29) im zweiten Kommissionierbereich (6) transportierbar sind.

20. Anlage nach Anspruch 19, **dadurch gekennzeichnet, dass** der Kommissionier-Arbeitsplatz (41) im ersten Kommissionierbereich (5) in übereinander liegenden Bereitstellungsebenen (E1-E4) nebeneinander angeordnete Bereitstellungsbereiche (44) für Lagerbehälter (2) aufweist, welche im Behälterlager (4) integriert sind.

21. Anlage nach Anspruch 19, **dadurch gekennzeichnet, dass** der Kommissionier-Arbeitsplatz (29) im zweiten Kommissionierbereich (6) den Bereitstellungsbereich (73) für zumindest einen Lagerbehälter (2) aufweist, welcher über die erste Fördertechnik (7) mit demselben Behälterlager (4) verbunden ist.

## Claims

1. A method for the order-picking of articles with different handling frequencies from storage containers (2) into order containers (3), in the case of which the storage containers (2) are conveyed by an automated first conveyor (7) from a container store (4) to order-picking workstations (29, 41) in different order-picking regions (5, 6) and at which a respective order-picker (42, 70), to make up an order, removes an article from at least one storage container (2) and sets it down in an order container (3) supplied by a second conveyor (8), **characterized in that** by means of a warehouse-management system (computer), in an order forecast relating to a number of orders for order-picking, the order positions for a respective article are determined and, in a planning check for the articles the storage containers (2), which contain the articles correctly sorted, are assigned either to an order-picking workstation (41) arranged in an integrated manner in the container store (4) in the first order-picking region (5) or to an order-picking workstation (29), arranged separately from the container store (4), in the second order-picking region (6), and that the storage containers (2) are transported over different, automated conveying routes (65, 80) of the first conveyor (7) either to supply regions (44) for the storage containers (2) at the first order-picking workstation (41) in the first order-picking region (5) or to a supply region (73) for the storage containers (2) at the second order-picking workstation (29) in the second order-picking region (6).

2. The method according to claim 1, **characterized in that** in the planning check of the warehouse-management system a number of order positions is determined and is compared with a limit value for order positions of an article.

3. The method according to claim 1 or 2, **characterized in that** in the planning check of the warehouse-management system at least one performance parameter is determined at the second conveyor (8) for the order containers (3), such as the capacity utilization of the conveyor (8) in its conveying section (22) running along the order-picking workstation (41), and is compared with a limit value for the performance parameter.

4. The method according to one of claims 1 to 3, **characterized in that** in the planning check by the warehouse-management system at the order-picking workstation (41) in the first order-picking region (5) a filling level is determined at each supply region (44).

5. The method according to one of claims 1 to 4, **characterized in that** in the planning check by the warehouse-management system a stock quantity of articles in each storage container (2) is determined and is compared to an order quantity of an order-picking order.

6. The method according to one of claims 1 to 5, **characterized in that** in the planning check by the warehouse-management system a stock quantity of articles in each storage container (2) is determined and is compared to an order quantity for articles required for processing of the order-picking orders according to the order forecast and a storage container (2), which contains articles of a required article type, is removed from the container store (4) and supplied in the second order-picking region (6), when in the first order-picking region (5) this required article type cannot be supplied.

7. The method according to one of claims 1 to 6, **characterized in that** the order-picking workstation (41) in the first order-picking region (5) has through-channels (45), which respectively form a supply region (44), wherein in the supply region (44) on a supply station (44a) at least one storage container (2) can be offered for the removal of an article from the storage container (2).

8. The method according to one of claims 1 to 6, **characterized in that** the order-picking workstation (41) in the first order-picking region (5) has through-channels (45), which respectively form a supply region (44) and a transfer region (46) and a conveying path, in particular transport device (47), such as a roller conveyor, wherein a storage container (2) can be moved along the conveying path between the supply region (44) and a transfer region (46) and wherein in the supply region (44) on a supply station (44a) at least one storage container (2) can be offered for the removal of an article from the storage container (2).

9. The method according to claim 7, **characterized in that** after removal of at least one article from the storage container (2), the still partially filled storage container (2) is stored back into the container store (4) by the first conveyor (7).

10. The method according to claim 7, **characterized in that** after removal of at least one article from the storage container (2), the still partially filled storage container (2) is moved for the time being from the supply region (44) into the transfer region (46), from which the still partially filled storage container (2) is taken over by the first conveyor (7) and subsequently stored back into the container store (4).

11. The method according to one of claims 1 to 10, **characterized in that** order-picking orders detected for each article are determined by the warehouse-management system in the order forecast and a storage container (2), which in a previous supply process was transported into a supply region (44) of the first order-picking region (5) and is still partially filled with articles, remains in the supply region (44) until the order-picking orders regarding the article concerned, detected according to the order forecast, have been processed.

12. The method according to one of claims 1 to 11, **characterized in that** a storage container (2), which in a previous supply process was transported into a supply region (44) of the first order-picking region (5) and is still partially filled with articles of a first article type, is stored back into the container store (4) from a supply region (44), when in the order forecast it is established by the warehouse-management system that the article of a second article type is required more frequently than the article of a first article type.

13. The method according to one of claims 1 to 12, **characterized in that** a storage container (2), which in a previous supply process was transported into a supply region (44) of the first order-picking region (5) and is still partially filled with articles, is stored back into the container store (4) from a supply region (44), when a performance parameter at the first conveyor (7) for the storage containers (2) lies below a limit value for the performance parameter.

14. The method according to one of claims 1 to 13, **characterized in that** a storage container (2), which in a previous supply process was transported into a supply region (44) of the first order-picking region (5) and is still partially filled with articles, is stored back into the container store (4) from a supply region (44), when a performance parameter at the second conveyor (8) for the order container (3), for example the capacity utilization of the conveyor (8) in its conveying section (22) running along the order-picking workstation (41), lies below a limit value for the performance parameter.

15. The method according to one of claims 1 to 14, **characterized in that** for the articles which are delivered to the order-picking workstation (41) in the first order-picking region (5) with a storage container (2), in addition a planning analysis is carried out by the warehouse-management system in the planning check, for optimization in the distribution of the storage containers (2) to unoccupied supply regions (44), and the storage container (2) is delivered to an unoccupied supply region (44) determined by the warehouse-management system.

16. The method according to claim 15, **characterized in that** in the planning analysis, a holding position is determined for the order container (3) on the second conveyor (8), and a storage container (2) is delivered to one of the supply regions (44) such that the storage container (2) is offered close to the holding position.

17. The method according to claim 15, **characterized in that** in the planning analysis, an order-picking zone (81) is determined for storage containers (2), which contain articles correctly sorted, and the storage containers (2) are delivered to some of the supply regions (44) such that the storage containers (2) are united in a grouped manner to an order-picking order in the order-picking zone (81) and are offered via the supply regions (44).

18. The method according to claim 1, **characterized in that** at the order-picking workstation (41) in the first order-picking region (6) and order-picking workstation (29) in the second order-picking region (6), different order-picking technologies are used.

19. An arrangement (1) for the order-picking of articles with different handling frequencies from storage containers (2) into order containers (3), with a container store (4), order-picking workstations (29, 41) in different order-picking regions (5, 6), an automated first conveyor (7) for the transport of storage containers (2) and a second conveyor (8) for the transport of storage containers (3), wherein the storage containers (2) are conveyed by means of the first conveyor (7) to the order-picking workstations (29, 41) and at these a respective order-picker (42, 70), to make up an order, removes at least one article from the storage container (2) and sets it down in an order container (3), in particular for carrying out the method according to one of claims 1 to 18, **characterized in that** a warehouse-management system has a program logic, in particular runs a computer program, by means of which in an order forecast relating to a number of order-picking orders, the order positions for a respective article are determined and, in a planning check for the articles the storage containers (2), which contain the articles correctly sorted are either assigned to a first order-picking region (5) or to a second order-picking region (6), wherein the first order-picking region (5) with at least one order-picking workstation (41) is integrated in the container store (4) and the second order-picking region (6) with at least one order-picking workstation (29) is arranged separately from the container store (4), and that the first conveyor (7) has different, automated conveying routes (65, 80), on which the storage containers (2) are able to be transported either to supply regions (44) for the storage containers (2) at the order-picking workstation (41) in the first order-picking region (5) or to a supply region (73) for the storage containers (2) at the order-picking workstation (29) in the second order-picking region (6).

20. The arrangement according to claim 19, **characterized in that** the order-picking workstation (41) in the first order-picking region (5) has supply regions (44) for storage containers (2), which are integrated in the container store (4), which supply regions are arranged adjacent to one another in supply levels (E1-E4) lying one over another.

21. The arrangement according to claim 19, **characterized in that** the order-picking workstation (29) in the second order-picking region (6) has the supply region (73) for at least one storage container (2), which is connected with the same container store (4) via the first conveyor (7).

## Revendications

1. Procédé de préparation de commandes d'articles, à différentes fréquences de rotation, depuis des conteneurs de stockage (2) jusque dans un conteneur de commande (3), par l'intermédiaire duquel les conteneurs de stockage (2) sont transportés par une première technique de convoyage (7) depuis un entrepôt de conteneurs (4) vers des postes de préparation de commande (29, 41) dans différentes zones de préparation de commande (5, 6), et où un personnel de préparation de commande (42, 70) sort, en fonction d'un bon de préparation de commande, un article d'au moins un conteneur de stockage (2) pour le déposer dans un conteneur de commande (3) mis à disposition par une deuxième technique de convoyage (8), **caractérisé en ce qu'**un système de gestion d'entrepôt (ordinateur), dans une prévision de commandes aux moyens de plusieurs bons de préparation de commande, détermine les positions de commande pour chaque article et, lors d'un contrôle d'ordonnancement des articles, affecte les conteneurs de stockage (2), qui contiennent les articles par type, à un poste de préparation de commande (41) agencé intégré dans l'entrepôt de conteneurs (4), dans une première zone de préparation de commande (5), et/ou à un poste de préparation de commande (29) séparé de l'entrepôt de conteneurs (4), dans une deuxième zone de préparation de commande (6), et **en ce que** les conteneurs de stockage (2) sont transportés sur différentes voies de convoyage automatisées (65, 80) de la première technique de convoyage (7) vers des zones de mise à disposition (44) des conteneurs de stockage (2) au niveau d'un premier poste de préparation de commande (41) dans la première zone de préparation de commande (5), ou vers une zone de mise à disposition (73) des conteneurs de stockage (2) au niveau d'un deuxième poste de préparation de commande (29) dans la deuxième zone de préparation de commande (6).

2. Procédé selon la revendication 1, **caractérisé en ce que** lors du contrôle d'ordonnancement par le système de gestion d'entrepôt, un certain nombre de positions de commande sont déterminées et comparées à une valeur limite pour les positions de commande d'un article.

3. Procédé selon la revendication 1 ou 2, **caractérisé en ce que** lors du contrôle d'ordonnancement par le système de gestion d'entrepôt, au moins un paramètre de fonctionnement de la deuxième technique de convoyage (8) pour des conteneurs de commande (3) est déterminé, comme la performance de la technique de convoyage (8) dans son tronçon de convoyage (22) s'étendant le long du poste de préparation de commande (41), et est comparé à une valeur limite pour le paramètre de performance.

4. Procédé selon l'une quelconque des revendications 1 à 3, **caractérisé en ce que** lors du contrôle d'ordonnancement par le système de gestion d'entrepôt au poste de préparation de commande (41) dans la première zone de préparation de commande (5), un taux de remplissage au niveau de chaque zone de mise à disposition (44) est déterminé.

5. Procédé selon l'une quelconque des revendications 1 à 4, **caractérisé en ce que** lors du contrôle d'ordonnancement par le système de gestion d'entrepôt, une quantité en stock des articles dans chaque conteneur de stockage (2) est déterminée, et est comparée à une quantité commandée d'un bon de préparation de commande.

6. Procédé selon l'une quelconque des revendications 1 à 5, **caractérisé en ce que** lors du contrôle d'ordonnancement par le système de gestion d'entrepôt, une quantité en stock des articles dans chaque conteneur de stockage (2) est déterminée, et est comparée avec une quantité de commande d'un article nécessaire pour le traitement du bon de préparation de commande conformément à la prévision de commandes, et un conteneur de stockage (2) contenant des articles d'un type d'article demandé, va être déplacé à partir de l'entrepôt de conteneurs (4) et mis à disposition dans la deuxième zone de préparation de commande (6), lorsque ce type d'article demandé ne peut pas être mis à disposition dans la première zone de préparation de commande (5).

7. Procédé selon l'une quelconque des revendications 1 à 6, **caractérisé en ce que** le poste de préparation de commande (41) présente des canaux de passage (45) dans la première zone de préparation de commande (5), qui forment chacun une zone de mise à disposition (44), dans lequel dans la zone de mise à disposition (44), au niveau d'un poste de mise à disposition (44a), au moins un conteneur de stockage (2) peut être utilisé pour le retrait d'un article à partir du conteneur de stockage (2) .

8. Procédé selon l'une quelconque des revendications 1 à 6, **caractérisé en ce que** le poste de préparation de commande (41) présente des canaux de passage (45) dans la première zone de préparation de commande (5), qui forment chacun une zone de mise à disposition (44) et une zone de transfert (46), ainsi qu'une voie de convoyage, en particulier un dispositif de transport (47), tel qu'un convoyeur à rouleaux, dans lequel un conteneur de stockage (2) peut être déplacé le long de la voie de convoyage entre la zone de mise à disposition (44) et une zone de transfert (46), et dans lequel, dans la zone de mise à disposition (44), au niveau d'un poste de mise à disposition (44a), au moins un conteneur de stockage (2) peut être utilisé pour le retrait d'un article à partir du conteneur de stockage (2).

9. Procédé selon la revendication 7, **caractérisé en ce qu'**après le retrait d'au moins un article à partir du conteneur de stockage (2), le conteneur de stockage (2) encore partiellement rempli est ramené via la première technique de convoyage (7) dans l'entrepôt de conteneurs (4).

10. Procédé selon la revendication 7, **caractérisé en ce qu'**après le retrait d'au moins un article à partir du conteneur de stockage (2), le conteneur de stockage (2) encore partiellement rempli est déplacé initialement depuis la zone de mise à disposition (44) jusque dans la zone de transfert (46), à partir de laquelle le conteneur de stockage (2) encore partiellement rempli va être repris par la première technique de convoyage (7) et ensuite ramené dans l'entrepôt de conteneurs (4).

11. Procédé selon l'une quelconque des revendications 1 à 10, **caractérisé en ce que** des bons de préparation de commande saisis pour chaque article sont déterminés par le système de gestion d'entrepôt dans la prévision de commandes, et un conteneur de stockage (2) qui, dans un processus de mise à disposition précédent a été transporté dans une zone de mise à disposition (44) de la première zone de préparation de commande (5) et qui est encore partiellement rempli d'articles, reste dans la zone de mise à disposition (44) jusqu'au traitement des bons de préparation de commande saisis selon la prévision de commandes pour l'article concerné.

12. Procédé selon l'une quelconque des revendications 1 à 11, **caractérisé en ce qu'**un conteneur de stockage (2), qui a été transporté dans un processus de mise à disposition précédent dans une zone de mise à disposition (44) de la première zone de prélèvement (5), et qui est encore partiellement rempli d'articles d'un premier type d'article, va être ramené depuis une zone de mise à disposition (44) jusque dans l'entrepôt de conteneurs (4), lorsqu'il est déterminé dans la prévision de commandes du système de gestion d'entrepôt que les articles d'un second type d'article sont plus fréquemment requis que les articles d'un premier type d'article.

13. Procédé selon l'une quelconque des revendications 1 à 12, **caractérisé en ce qu'**un conteneur de stockage (2), qui a été transporté dans un processus de mise à disposition précédent dans une zone de mise à disposition (44) de la première zone de prélèvement (5), et qui est encore partiellement rempli d'articles, va être ramené depuis une zone de mise à disposition (44) jusque dans l'entrepôt de conteneurs (4), lorsqu'un paramètre de performance de la première technique de convoyage (7) pour le conteneur de stockage (2) est au-dessous d'une valeur limite pour le paramètre de performance.

14. Procédé selon l'une quelconque des revendications 1 à 13, **caractérisé en ce qu'**un conteneur de stockage (2), qui a été transporté dans un processus de mise à disposition précédent dans une zone de mise à disposition (44) de la première zone de prélèvement (5), et qui est encore partiellement rempli d'articles, va être ramené depuis une zone de mise à disposition (44) jusque dans l'entrepôt de conteneurs (4), lorsqu'un paramètre de performance de la deuxième technique de convoyage (8) pour le conteneur de commande (3), par exemple la performance de la technique de convoyage (8) dans son tronçon de convoyage (22) s'étendant le long du poste de préparation de commande (41), est au-dessous d'une valeur limite pour le paramètre de performance.

15. Procédé selon l'une quelconque des revendications 1 à 14, caractérisé en ce pour l'article, qui est amené au poste de préparation de commande (41) dans la première zone de préparation de commande (5) avec un conteneur de stockage (2), une analyse d'ordonnancement est effectuée en plus du contrôle d'ordonnancement par le système de gestion d'entrepôt, afin d'optimiser la distribution du conteneur de stockage (2) au niveau de zones de mise à disposition (44) inoccupées, et le conteneur de stockage (2) est amené à une zone de mise à disposition (44) inoccupée déterminée par le système de gestion d'entrepôt.

16. Procédé selon la revendication 15, **caractérisé en ce que** lors de l'analyse d'ordonnancement, une position d'arrêt pour le conteneur de commande (3) sur la deuxième technique de convoyage (8) est déterminée, et un conteneur de stockage (2) est ainsi amené à l'une des zones de mise à disposition (44), de telle sorte que le conteneur de stockage (2) sera utilisé à proximité de la position d'arrêt.

17. Procédé selon la revendication 15, **caractérisé en ce que** lors de l'analyse d'ordonnancement, une zone de préparation de commande (81) pour les conteneurs de stockage (2), qui comportent des articles par type, est déterminée, et les conteneurs de stockage (2) sont amenés de la sorte vers certaines des zones de mise à disposition (44), **en ce que** les conteneurs de stockage (2) sont regroupés dans la zone de préparation de commande (81) ensemble par rapport à un bon de préparation de commande, et sont utilisés via les zones de mise à disposition (44).

18. Procédé selon la revendication 1, **caractérisé en ce que** différentes technologies de préparation de commande sont utilisées au niveau du poste de préparation de commande (41) dans la première zone de préparation de commande (6) et du poste de préparation de commande (29) dans la deuxième zone de préparation de commande (6).

19. Installation (1) de préparation de commandes d'articles, à différentes fréquences de rotation, depuis des conteneurs de stockage (2) jusque dans un conteneur de commande (3), avec un entrepôt de conteneurs (4),des postes de préparation de commande (29, 41) dans différentes zones de préparation de commande (5, 6), une première technique de convoyage (7) pour transporter des conteneurs de stockage (2) et une deuxième technique de convoyage (8) pour transporter des conteneurs de commande (3), de telles sorte que les conteneurs de stockage (2) sont amenés au moyen de la première technique de convoyage (7) jusqu'aux postes de préparation de commande (29, 41), et au niveau de ceux-ci, au moins un article est sorti du conteneur de stockage (2) par un personnel de préparation de commande (42, 70) par rapport à un bon de préparation de commande, et est disposé dans un conteneur de commande (3), en particuliers pour mettre en oeuvre le procédé selon l'une quelconque des revendications 1 à 18, **caractérisé en ce qu'**un système de gestion d'entrepôt présente une logique de programme, en particulier fait tourner un programme informatique au moyen duquel les positions de commande de chaque article vont être déterminées dans une prévision de commandes au moyen de plusieurs bons de préparation de commande, et lors d'un contrôle d'ordonnancement des articles, affecte les conteneurs de stockage (2), qui contiennent les articles par type, à une première zone de préparation de commande (5), et/ou à une deuxième zone de préparation de commande (6), de telle sorte que la première zone de préparation de commande (5) avec au moins un poste de préparation de commande (41) est agencée intégrée dans l'entrepôt de conteneurs (4), et la deuxième zone de préparation de commande (6) avec au moins un poste de préparation de commande (29) est agencée séparée de l'entrepôt de conteneurs (4), et **en ce que** la première technique de convoyage (7) présente différentes voies de convoyage automatisées (65, 80), sur lesquelles les conteneurs de stockage (2) peuvent être transportés vers des zones de mise à disposition (44) des conteneurs de stockage (2) au niveau d'un premier poste de préparation de commande (41) dans la première zone de préparation de commande (5), ou vers une zone de mise à disposition (73) des conteneurs de stockage (2) au niveau d'un deuxième poste de préparation de commande (29) dans la deuxième zone de préparation de commande (6).

20. Installation selon la revendication 19, **caractérisé en ce que** le poste de préparation de commande (41) dans la première zone de préparation de commande (5) présente des zones de mise à disposition (44) agencées de manière juxtaposée dans des niveaux de mise à disposition (E1-E4) s'étendant les uns au-dessus des autres des zones de stockage intermédiaire pour les conteneurs de stockage (2), qui sont intégrées dans l'entrepôt de conteneurs (4).

21. Installation selon la revendication 19, **caractérisé en ce que** le poste de préparation de commande (29) dans la deuxième zone de préparation de commande (6) présente la zone de mise à disposition (73) pour au moins un conteneur de stockage (2), qui est reliée audit entrepôt de conteneurs (4) via la première technique de convoyage (7).
